# EUROPEAN PATENT SPECIFICATION

(11) **EP 2 521 973 B1**
(45) Date of publication and mention of the grant of the patent: **12.04.2017**
(21) Application number: 11700209.7
(22) Date of filing: 05.01.2011
(51) Int. Cl.: G06F 13/38, G06F 13/42

(54) **CONNECTING MULTIPLE ACCESSORIES TO A PORTABLE COMPUTING DEVICE**
VERBINDUNG MEHRERER ZUBEHÖRTEILE AN EINE TRAGBARE RECHNERVORRICHTUNG
CONNEXION DE MULTIPLES ACCESSOIRES À UN DISPOSITIF INFORMATIQUE PORTABLE

(30) Priority: 07.04.2010 US 755905; 06.01.2010 US 292619 P
(43) Date of publication of application: 14.11.2012
(73) Proprietor: Apple Inc., Cupertino, CA 95014 (US)
(72) Inventor: YEW, Jason J., Cupertino California 95014 (US); RATHI, Shailesh, Cupertino California 95014 (US); KRUEGER, Scott, Cupertino California 95014 (US); BOLTON, Lawrence G., Cupertino California 95014 (US); ANANNY, John M., Cupertino California 95014 (US)
(74) Representative: Barnfather, Karl Jon
(86) International application number: PCT/US2011/020244
(87) International publication number: WO 2011/085018

(56) References cited:
- WO-A2-2009/002786
- GB-A- 2 452 611
- US-A1- 2008 037 538

## Description

### BACKGROUND

The present invention relates generally to portable computing devices that interoperate with accessories and in particular to connection of multiple accessories to one physical port of a portable computing device.

In recent years, a number of portable computing devices (PCDs) have been developed. Examples of PCDs include portable media players, mobile phones, personal digital assistants (PDAs), portable e-mail devices, video game players, portable navigation units relying on Global Positioning System (GPS) satellite data, and multi-function devices that can integrate numerous functions such as media storage and playback, mobile phone, Internet access, e-mail, personal information management, game play, GPS/navigation capability, and the like. Examples of multi-function PCDs include various iPhone (RTM) and iPod (RTM) models manufactured and sold by Apple Inc., assignee of the present application, as well as other portable electronic devices made and sold by other manufactures and distributors under their respective brand names.

PCDs are frequently docked with other electronic devices, referred to herein as "accessories." For example, from time to time, a user may dock a PCD with a personal computer to synchronize media content and/or metadata, personal data, and the like. A user may at other times dock the same PCD with other electronic devices, such as an in-vehicle media system, a speaker dock, or the like. The user may also dock the PCD with a charger that provides power to the PCD but does not include other data or information sharing capability.

WO 2009002786 discloses how a host device and an accessory exchange information (e.g., commands and data) via an intermediate device. The host device and accessory can each connect to the intermediate device through a direct wired path and can exchange commands and data with the intermediate device. The host device and the accessory can also "tunnel" information to each other through the intermediate device, by packaging the tunneled information as a payload of a command recognizable by the intermediate device; the intermediate device can repackage and forward the payload.

### SUMMARY OF THE INVENTION

According to a first aspect of the invention, there is provided a relay device according to appended independent claim 1. According to a second aspect of the invention, there is provided a method of operating a relay accessory according to appended independent claim 5. According to a third aspect of the invention, there is provided a portable computing device according to appended independent claim 9. According to a fourth aspect of the invention, there is provided a method of operating a portable computing device according to appended independent claim 12. Preferable features of the invention are defined in the dependent claims.

### BRIEF SUMMARY

Existing PCDs typically provide an interface that supports connecting to one accessory at a time. As the capabilities of PCDs have expanded from essentially single-function devices (e.g., MP3 player, mobile phone, GPS device) to the multifunction devices that are becoming prevalent today, the single-accessory connection has limited users' ability to configure optimal systems for various working environments.

Certain embodiments of the present invention relate to connection of a portable computing device (PCD) to multiple accessories. In some embodiments, two or more accessories can be connected to a PCD in a daisy chain topology, with the PCD at a "front" end of the chain. At least one intermediary accessory (also referred to herein as a "relay" or "relay accessory") provides a "front" port for connection to the PCD and a "rear" port for connection to another accessory, which might or might not also be a relay. Thus, any number of accessories can be incorporated into a daisy chain. Each connected accessory (including the relays) can interact with the PCD; thus, each accessory can invoke PCD functionality, have its own functionality invoked by the PCD, receive media content or other information from the PCD, deliver media content or other information to the PCD, and so on. Concurrently with its own interaction with the PCD, each intermediary accessory can also act as a relay for other accessories in the chain, directing commands, data and other signals from a downstream accessory forward along the chain toward the PCD (regardless of whether an upstream accessory is present) and also directing commands, data and other signals rearward along the chain from the PCD toward a downstream accessory, thereby allowing downstream accessories to interact with the PCD. In addition, in some embodiments, streaming signals (e.g., audio and/or video signals) can be routed from the PCD to various accessories in the daisy chain.

To the extent that an accessory interacts with the PCD, it can do so using exactly the same protocols and commands as would be used in a direct connection, regardless of how many levels of indirection may be present between a particular accessory and the PCD. An accessory that does not act as a relay can be placed at the rear terminus of the daisy chain, and that accessory can operate as if it were directly connected to the PCD, allowing legacy accessories designed for a direct connection to the PCD to be incorporated into multi-accessory systems. An accessory that acts as a relay can do so without requiring information as to its position within the daisy chain; it can simply relay commands and other signals received at its rear port out through its front port and vice versa.

One aspect of the present invention relates to a relay accessory. The relay accessory can have a first (or "front") interface configured to connect to a portable computing device, a second (or "rear") interface configured to connect to another accessory, and a controller coupled to the first and second interfaces. The controller can be configured (e.g., via suitable program code) to communicate with the portable computing device via the first interface in accordance with an accessory protocol. Upon detecting a connection of another accessory to the second interface, the controller can notify the portable computing device that the other accessory has become connected to the second interface and can relay communications conforming to the accessory protocol between the first interface and the second interface. The relaying can be implemented such that the presence of the relay accessory is transparent to the other accessory and such that communications originating from the other accessory are distinguishable by the portable computing device from communications originating from the relay accessory.

Relay accessories can execute various communication methods. For example, a relay accessory can receive a first command message from an upstream device (which can be a PCD or another accessory), where the first command message includes a command and a payload. The relay accessory can determine whether the command is a data sending command. If it is, the relay accessory can forward a first message corresponding to the payload of the data sending command to a downstream device (i.e., another accessory). Otherwise, the relay accessory can process the command locally.

Another aspect of the present invention relates to portable computing device. The portable computing device can include an interface configured to connect to an accessory and a processor coupled to the interface. The processor can be configured (e.g., via suitable program code) to detect when a first accessory becomes connected to the interface and to communicate with the first accessory using messages defined in an accessory protocol. During such communication, the processor can receive a notification message from the first accessory indicating that a second accessory has become connected to a rear interface of the first accessory. The processor can communicate with the second accessory through the first accessory. For example, the processor can package a message defined in the accessory protocol within a data sending command of the accessory protocol and send the data sending command to the first accessory.

Portable computing devices can execute various methods to communicate with one or more connected accessories. For example, the portable computing device can communicate with a first accessory via an accessory interface using an accessory protocol and can determine whether the first accessory has a rear interface that is connected to a second accessory. If the first accessory has a rear interface that is connected to a second accessory, the portable computing device can communicate with the second accessory via the accessory interface. For example, the portable computing device can generating a command to the second accessory, where the command conforms to the accessory protocol, package the command in a data sending command of the accessory protocol that instructs the first accessory to extract the packaged command and forward the extracted command to the second accessory, and send the data sending command to the first accessory via the accessory interface.

As another example, a portable computing device can communicate with any number of accessories through one physical port. Thus, a portable computing device can establish a connection to a first accessory on a physical port of the portable computing device and establish a connection to a number of other accessories through the first accessory. For each accessory other than the first, the portable computing device can associate a virtual port with that accessory; a virtual port can be associated with the physical port, and each virtual port can have a different virtual distance from the portable communication device. To send an outgoing message, the portable computing device can identify one of the plurality of accessories as a destination accessory for the outgoing message, package the outgoing message in a number of nested data sending commands, with the number being determined based on the virtual distance of the destination accessory, and send the packaged outgoing message to the first accessory via the physical port.

The following detailed description together with the accompanying drawings will provide a better understanding of the nature and advantages of the present invention.

### BRIEF DESCRIPTION OF THE DRAWINGS

FIG. 1 is a front view of a portable computing device (PCD) according to an embodiment of the present invention.
FIGs. 2A and 2B are, respectively, a front perspective view and side view of a dock for a PCD according to an embodiment of the present invention.
FIG. 3 is a simplified view of the dock of FIGs. 2A and 2B connected to a PCD and a media viewer accessory according to an embodiment of the present invention.
FIG. 4 is a simplified view of the dock of FIGs. 2A and 2B connected to a PCD and a camera accessory according to an embodiment of the present invention.
FIG. 5 is a simplified block diagram of a PCD, a relay accessory, and another accessory interconnected to provide a system according to an embodiment of the present invention.
FIG. 6 illustrates an operating principle of an embodiment of the present invention.
FIG. 7 is a table listing commands related to providing a virtual port according to an embodiment of the present invention.
FIG. 8 illustrates message passing between a PCD, a relay accessory and another accessory according to an embodiment of the present invention.
FIG. 9 illustrates message passing between a PCD and an accessory according to an embodiment of the present invention.
FIG. 10 is a flow diagram of a process that can be executed by a PCD to communicate with two accessories according to an embodiment of the present invention.
FIG. 11 is a flow diagram of a process that can be executed by a PCD to send a message to a second accessory via a first accessory according to an embodiment of the present invention.
FIG. 12 is a flow diagram of a process that can be executed by a relay accessory to communicate with a PCD and another accessory according to an embodiment of the present invention.
FIGs. 13A and 13B are flow diagrams of a process that can be executed by a PCD to interact with a relay accessory and another accessory according to an embodiment of the invention.
FIGs. 14A and 14B are flow diagrams of a process that can be used by a relay accessory to interact with a PCD and another accessory according to an embodiment of the present invention.
FIG. 15 illustrates an operating principle of an embodiment of the invention in a system with multiple relay accessories connected in a daisy chain.
FIGs. 16-18 illustrate examples of propagation of commands for the system of FIG. 15 according to various embodiments of the present invention.
FIGs. 19 and 20 are flow diagrams of processes usable by a PCD to communicate with multiple accessories in a daisy chain configuration according to an embodiment of the present invention.
FIG. 21 is a simplified block diagram of a PCD and a relay accessory showing routing of media signals according to an embodiment of the present invention.
FIG. 22 is a flow diagram of a process that can be used by a PCD to control routing of output signals according to an embodiment of the present invention.

### DETAILED DESCRIPTION

Certain embodiments of the present invention relate to connection of a portable computing device (PCD) to multiple accessories. In some embodiments, two or more accessories can be connected to a PCD in a daisy chain topology, with the PCD at a "front" end of the chain. At least one intermediary accessory (also referred to herein as a "relay" or "relay accessory") provides a "front" port for connection to the PCD and a "rear" port for connection to another accessory, which might or might not also be a relay. Thus, any number of accessories can be incorporated into a daisy chain. Each connected accessory (including the relays) can interact with the PCD; thus, each accessory can invoke PCD functionality, have its own functionality invoked by the PCD, receive media content or other information from the PCD, deliver media content or other information to the PCD, and so on. Concurrently with its own interaction with the PCD, each intermediary accessory can also act as a relay for other accessories in the chain, directing commands, data and other signals from a downstream accessory forward along the chain toward the PCD (regardless of whether an upstream accessory is present) and also directing commands, data and other signals rearward along the chain from the PCD toward a downstream accessory, thereby allowing downstream accessories to interact with the PCD. In addition, in some embodiments, streaming signals (e.g., audio and/or video signals) can be routed from the PCD to various accessories in the daisy chain.

To the extent that an accessory interacts with the PCD, it can do so using exactly the same protocols and commands as would be used in a direct connection, regardless of how many levels of indirection may be present between a particular accessory and the PCD. An accessory that does not act as a relay can be placed at the rear terminus of the daisy chain, and that accessory can operate as if it were directly connected to the PCD, allowing legacy accessories designed for a direct connection to the PCD to be incorporated into multi-accessory systems. An accessory that acts as a relay can do so without requiring information as to its position within the daisy chain; it can simply relay commands and other signals received at its rear port out through its front port and vice versa.

Embodiments described herein can be used with a wide variety of PCDs and accessories, examples of which will now be described.

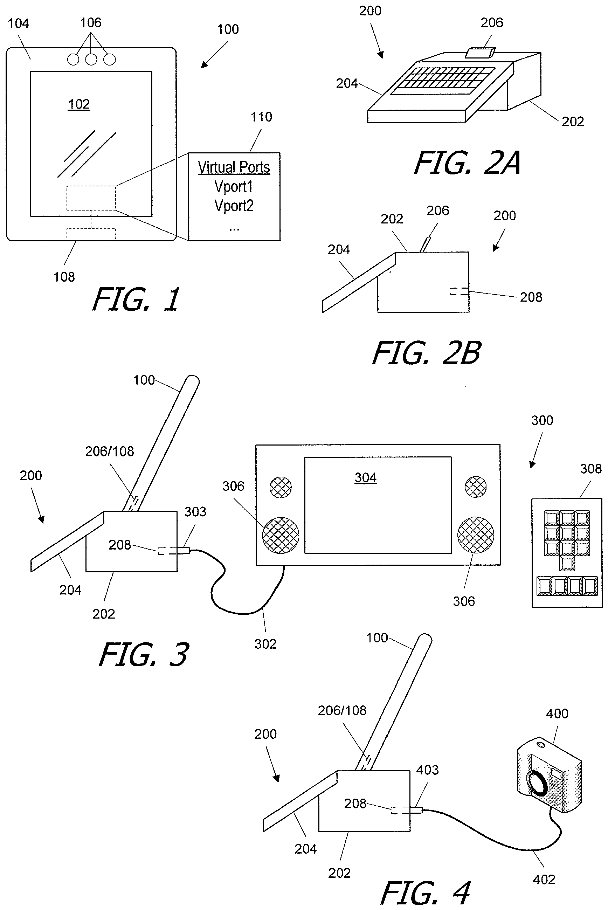

FIG. 1 is a front view of a portable computing device (PCD) 100 according to an embodiment of the present invention. PCD 100 can have a touchscreen display 102 surrounded by bezel 104. Control buttons 106 are provided in bezel 104 and can be used, e.g., to wake PCD 100 from a hibernation state, to put PCD 100 into a hibernation state, or the like.

PCD 100 can have a connector 108 recessed into a bottom surface thereof, allowing PCD 100 to dock with an accessory device either directly or in a daisy-chain configuration, examples of which are described below. Connector 108 can include a number of pins for carrying power, analog, and digital signals between PCD 100 and a connected accessory. In one embodiment, connector 108 can be implemented as a 30-pin docking connector as used in existing iPod^{®} and iPhone^{®} products sold by Apple Inc., assignee of the present application; in this embodiment, connector 108 is recessed into the housing of PCD 100 and is referred to as a "receptacle" connector. Other connectors can also be used. PCD 100 can provide a physical port using connector 108 and, as indicated by inset 110, can associate multiple virtual ports with a single physical port; examples are described below.

In the embodiment shown, PCD 100 can be a tablet computer with, e.g., a 10-inch screen. In other embodiments, PCD 100 can have a variety of form factors and configurations, e.g., smart phone, personal digital assistant, media player, portable web browser, etc.

FIGs. 2A and 2B are, respectively, a front perspective view and side view of a dock 200 for PCD 100 according to an embodiment of the present invention. Dock 200 has a base section 202, a keyboard 204, a PCD connector 206 and an accessory connector 208.

Base section 202 can include electronic components as well as mechanical ballast to provide stability to dock 200. Keyboard 204 can include a conventional QWERTY keyboard, numeric keypad, and/or other user input controls. Keyboard 204 can be mechanically and electrically coupled to base section 202, allowing keystroke information to be passed to PCD 100, e.g., via PCD connector 206.

PCD connector 206 can be designed to mate with connector 108 of PCD 100 of FIG. 1. For example, PCD connector 206 can be a "plug" counterpart of receptacle connector 108, extending outward from base section 202. Accessory connector 208, shown in FIG. 2B, can be identical to connector 108 of PCD 100 of FIG. 1. In this configuration, any accessory with a connector capable of connecting to connector 108 of PCD 100 can also connect to accessory connector 208 of dock 200. Use of complementary PCD connector 206 and accessory connector 208, while not required, permits another accessory to connect to PCD 100 either directly (by connecting to connector 108) or indirectly (by connecting to accessory connector 208 when connector 206 is connected to PCD 100). In some embodiments, whether the other accessory's connection to PCD 100 is direct or indirect can be made transparent to the other accessory through the operation of PCD 100 and dock 200; examples are described below.

FIGs. 3 and 4 are simplified views of systems that can be provided using dock 200. In FIG. 3, PCD 100 (shown in side view) is connected to dock 200 by mating connectors 206 and 108. A media viewer accessory 300 can be connected to accessory connector 208 of dock 200, in this instance by a cable 302 that has a connector 303 adapted to mate with accessory connector 208. Media viewer accessory 300 can provide a display screen 304 and speakers 306, allowing a user to view visual content and hear audio content. In this embodiment, remote control 308 can communicate wirelessly with media viewer accessory 300. In some embodiments, media viewer accessory 300 can have controls (not shown) disposed on its housing, in addition to or instead of wireless remote control 308. Media viewer accessory 300 can send commands from remote control 308 and/or controls disposed on its housing to PCD 100. The commands can be relayed via dock 200 in this instance, thereby allowing the user to control media playback in PCD 100 via accessory 300. The presence of dock 200 can be transparent to accessory 300, as described below. In addition to acting as a relay for commands between accessory 300 and PCD 100, dock 200 can also interact with PCD 100 as an accessory, e.g., sending signals corresponding to keypress events on keyboard 204 to PCD 100.

In FIG. 4, PCD 100 is connected to dock 200 by mating connectors 206 and 108. A camera accessory 400 can be connected to accessory connector 208 by a cable 402 that has a connector 403 adapted to mate with accessory connector 208. Camera 400 can be capable of capturing still images and/or video and can include a storage medium to store captured images. In some embodiments, PCD 100 can be operated to control camera 400 to capture images, with dock 200 relaying commands from PCD 100 to camera 400 in a manner that is transparent to camera 400. Thus, operation of camera 400 can be independent of whether PCD 100 is connected to camera 400 directly or via dock 200. Further, in addition to acting as a relay for commands between camera 400 and PCD 100, dock 200 can also interact with PCD 100 as an accessory. For example, in some embodiments, a user can operate keyboard 204 of dock 200 to provide camera-control input to PCD 100; PCD 100 can communicate the resulting camera control signals to camera 400 via dock 200.

It will be appreciated that the devices and configurations described herein are illustrative and that variations and modifications are possible. For example, as noted above, the term PCD refers generally to a broad category of personal computing and/or communication devices that can easily be carried by a user, not limited to any particular form factor or combination of capabilities.

The various accessories described herein are also illustrative, and many other accessories can also be used. For example, an accessory can provide a reader/recorder for removable storage media such as flash memory media (e.g., Secure Digital, or "SD," cards; USB drives) or optical media (e.g., compact disc or DVD), and a PCD can be operated to read from and/or write to the storage media. A printer accessory can also be provided for printing documents or other data under control of the PCD. Still other accessories can provide enhanced functionality such as radio frequency (RF) tuners or transmitters that can be controlled by a PCD, remote user interfaces to control a PCD, or the like.

Further, while the accessories in FIGs. 3 and 4 are shown as connected to the dock by a cable, use of a cable is not required. In some embodiments, a mating connector can be built into or onto the housing of the accessory so that no cable is needed. In embodiments where cables are used, connectors at the two ends of the cable can have different form factors and/or numbers of pins. For example, if a particular accessory only uses a subset of the pins on the PCD connector, only the pins that are actually used need be connected through the cable; other pins of the PCD connector can be left floating or terminated as appropriate.

The dock is also illustrative and can be modified. For example, a keyboard or indeed any user input device is not required. A dock can have its own output devices (e.g., speakers, display screen, or the like) in addition to or instead of user input devices. The physical arrangement of connectors can be modified; for example, while connector 208 is sometimes referred to herein as a "rear" connector, it is not required to be located at a rear surface or indeed any particular surface of the dock. Further, although the use of complementary PCD and accessory connectors in a dock can facilitate interoperability with existing accessories, it is not required. Those skilled in the art with access to the present teachings will appreciate that any accessory compatible with a particular PCD 100 can be made capable of operating as a relay by outfitting the accessory with appropriate connectors and control logic.

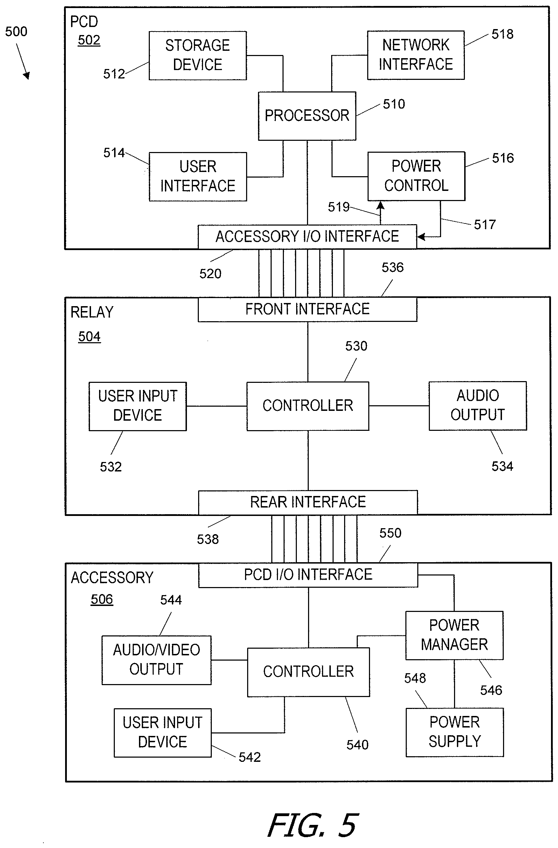

FIG. 5 is a simplified block diagram of a system 500 including PCD 502, relay 504, and accessory 506 according to an embodiment of the present invention. In this embodiment, PCD 502 (e.g., implementing PCD 100 of FIG. 1) can provide computing, communication and/or media playback capability. PCD 502 can include processor 510, storage device 512, user interface 514, power manager 516, network interface 518, and accessory input/output (I/O) interface 520. PCD 502 can also include other components (not explicitly shown) to provide various enhanced capabilities.

Storage device 512 can be implemented, e.g., using disk, flash memory, or any other non-volatile storage medium. In some embodiments, storage device 512 can store media assets such as audio, video, still images, or the like, that can be played by PCD 502. Storage device 512 can also store other information such as a user's contacts (names, addresses, phone numbers, etc.); scheduled appointments and events; notes; and/or other personal information. In some embodiments, storage device 512 can store one or more application programs to be executed by processor 510 (e.g., video game programs, personal information management programs, media playback programs, etc.).

User interface 514 can include input devices such as a touch pad, touch screen, scroll wheel, click wheel, dial, button, switch, keypad, microphone, or the like, as well as output devices such as a video screen, indicator lights, speakers, headphone jacks, or the like, together with supporting electronics (e.g., digital-to-analog or analog-to-digital converters, signal processors, or the like). A user can operate input devices of user interface 514 to invoke the functionality of PCD 502 and can view and/or hear output from PCD 502 via output devices of user interface 514.

Processor 510, which can be implemented as one or more integrated circuits (e.g., a conventional microprocessor or microcontroller), can control the operation of PCD 502. In various embodiments, processor 404 can execute a variety of programs in response to program code and can maintain multiple concurrently executing programs or processes. At any given time, some or all of the program code to be executed can be resident in processor 510 and/or in storage media such as storage device 512.

Through suitable programming, processor 510 can provide various functionality for PCD 502. For example, in response to user input signals provided by user interface 514, processor 510 can operate a database engine to navigate a database of media assets stored in storage device 512 in response to user input and display lists of selected assets. Processor 510 can respond to user selection of an asset (or assets) to be played by transferring asset information to a playback engine also operated by processor 510, thus allowing media content to be played. Processor 510 can also operate other programs to control other functions of PCD 502. In some embodiments, processor 510 implements a protocol daemon and other programs to manage communication with one or more connected accessories (e.g., relay 504 and accessory 506); examples are described below.

Power manager 516 provides power management capability for PCD 502. For example, power manager 516 can deliver power from a battery (not explicitly shown) to accessory I/O interface 520 via line 517 and to other components of PCD 502 (power connections not shown). Power manager 516 can also receive power via accessory I/O interface 520 and line 519 and deliver received power to various components of PCD 502; power received from an accessory can also be delivered to the battery, thereby allowing the battery to be recharged via accessory I/O interface 520. In some embodiments, power manager 516 can be implemented using programmable or controllable circuits operating in response to control signals generated by program code executing on processor 510 or as a separate microprocessor or microcontroller.

In some embodiments, power manager 516 is responsive to signals from a sensor (not explicitly shown) in accessory I/O interface 520. The sensor can generate a signal indicative of the type of accessory connected, and power manager 516 can use this information to determine, e.g., whether to distribute power from the battery or power received from accessory I/O interface 520. Power manager 516 can also provide other power management capabilities, such as regulating power consumption of other components of PCD 502 based on the source and amount of available power, monitoring stored power in the battery and generating user alerts if the stored power drops below a minimum level, and so on.

Network interface 518 can provide voice and/or data communication capability for PCD 502. In some embodiments network interface 518 can include radio frequency (RF) transceiver components for accessing wireless voice and/or data networks (e.g., using cellular telephone technology, advanced data network technology such as 3G or EDGE, WiFi (IEEE 802.11 family standards), or other mobile communication technologies, or any combination thereof), GPS receiver components, and/or other components. In some embodiments network interface 518 can provide wired network connectivity (e.g., Ethernet) in addition to or instead of a wireless interface. Network interface 518 can be implemented using a combination of hardware (e.g., antennas, modulators/demodulators, encoders/decoders, and other analog and/or digital signal processing circuits) and software components.

Accessory I/O interface 520 can allow PCD 502 to communicate with various accessories. For example, accessory I/O interface 520 can support connections to a computer, an external speaker dock or media playback station (e.g., as shown in FIG. 3), a digital camera (e.g., as shown in FIG. 4), a radio tuner (e.g., FM, AM and/or satellite), an in-vehicle entertainment system, an external video device, card reader, disc reader, or the like. In accordance with some embodiments of the invention, accessory I/O interface 520 can support connection to multiple accessories in a daisy chain configuration, allowing PCD 502 to manage concurrent communication with multiple accessories. This can be done, for example, by associating multiple virtual ports with a physical communication port provided by accessory I/O interface 520, e.g., as described below.

In some embodiments, accessory I/O interface 520 can include a connector, such as a 30-pin connector corresponding to the connector used on iPod^{®} and iPhone^{®} products, as well as supporting circuitry. The connector can provide connections for power and ground as well as for various wired communication interfaces such as Universal Serial Bus (USB), FireWire (IEEE 1394 standard), and/or universal asynchronous receiver/transmitter (UART). The connector can also provide connections for audio and/or video signals, which may be transmitted to or from PCD 502 in analog and/or digital formats. Thus, accessory I/O interface 520 can support multiple communication channels, and a given accessory can use any or all of these channels.

Relay accessory 504 (e.g., implementing dock 200 of FIG. 2) can include controller 530, user input device 532, audio output device 534, front interface 536, and rear interface 538. Relay accessory 504 is representative of a broad range of accessories that can have their own functionality and additionally serve as a relay for a daisy chain connection between a PCD and another accessory. Relay accessories can vary widely in capability, complexity, and form factor. Various relay accessories may include components not shown in FIG. 5, including but not limited to storage devices (disk, flash memory, etc.) with fixed or removable storage media; video screens, speakers, or ports for connecting to external audio/video devices; camera components such as lenses, image sensors, and controls for same (e.g., aperture, zoom, exposure time, frame rate, etc.); microphones for recording audio (either alone or in connection with video recording); and so on.

Controller 530 can include, e.g., a microprocessor or microcontroller executing program code to perform various functions associated with relay accessory 504. For example, where relay accessory 504 incorporates a keyboard (e.g., as shown in FIG. 2A), controller 530 can interpret keyboard input and send corresponding information to PCD 502.

User input device 532 may include user-operable controls such as a touch pad, touch screen, scroll wheel, click wheel, dial, button, switch, keyboard, keypad, microphone, or the like. A user can operate the various input controls of user interface 532 to invoke the functionality of relay accessory 504, and such functionality may include exchanging control signals, data, or other communications with PCD 502, e.g., as described below.

In some embodiments, relay accessory 504 can also provide output devices such as audio output device 534. Audio output device 534 can include speakers and/or connection ports for connecting external speakers. Relay accessory 504 can also provide other output devices (not explicitly shown) such as a video screen, indicator lights, speakers, headphone jacks or the like, together with supporting electronics (e.g., digital-to-analog or analog-to-digital converters, signal processors or the like). Such components can allow the user to view and/or hear output from relay accessory 504.

Front interface 536 can allow relay accessory 504 to communicate with PCD 502 either directly or via an upstream intermediary (not shown in FIG. 5). In accordance with some embodiments of the invention, front interface 536 can include a connector that mates directly with a connector included in PCD 502, such as a 30-pin connector complementary to the connector used on various iPod^{®} products. Such a connector can be used to supply power to PCD 502 or receive power from PCD 502, to send and/or receive audio and/or video signals in analog and/or digital formats, and to communicate information using various standard interfaces such as USB, UART, and/or FireWire. Other connectors may also be used; for example, front interface can incorporate a standard USB connector and can connect to accessory I/O interface 520 of PCD 502 via an adapter cable. In other embodiments, front interface 536 can communicate wirelessly (e.g., using Bluetooth) with accessory I/O interface 520, and no physical contact is required.

Rear interface 538 can allow relay accessory 504 to communicate with a downstream accessory 506. In accordance with some embodiments of the invention, rear interface 538 can include a connector, such as a 30-pin connector corresponding to the connector used on iPod^{®} and iPhone^{®} products, as well as supporting circuitry; this connector can be physically interchangeable with the connector in accessory I/O interface of PCD 502 so that any device capable of connecting to accessory I/O interface 520 of PCD 502 can also connect to rear interface 538 of relay accessory 504. Like accessory I/O interface 520, rear interface 538 can provide connections for power and ground as well as for various wired communication interfaces such as USB, FireWire, and/or UART.

Downstream accessory 506 (e.g., implementing accessory 300 of Fig 3 or accessory 400 of FIG. 4) can include controller 540, user input device 542, audio/video output device 544, power manager 546, power supply 548 and PCD I/O interface 550. Like relay accessory 504, downstream accessory 506 is representative of a broad range of accessories that can have their own functionality and be connected to PCD 502 either directly or via an intermediary such as relay accessory 504. Accessories can vary widely in capability, complexity, and form factor. Various accessories may include components not shown in FIG. 5, including but not limited to storage devices (disk, flash memory, etc.) with fixed or removable storage media; camera components such as lenses, image sensors, and controls for same (e.g., aperture, zoom, exposure time, frame rate, etc.); microphones for recording audio (either alone or in connection with video recording); and so on.

Controller 540 can include, e.g., a microprocessor or microcontroller executing program code to perform various operations associated with accessory 506. For example, where accessory 506 incorporates a sound and/or video system (e.g., as shown in FIG. 3), program code executed by controller 540 can include programs for digital audio decoding, analog or digital audio processing, and the like. Where accessory 506 incorporates a digital camera (e.g., accessory 400 of FIG. 4), program code executed by controller 540 can include programs that allow a user to control the camera to adjust settings, capture images, display images, transfer image data to another electronic apparatus, etc.

User input device 542 may include user-operable controls such as a touch pad, touch screen, scroll wheel, click wheel, dial, button, switch, keyboard, keypad, microphone, or the like. A user can operate the various input controls of user interface 534 to invoke functionality of accessory 506, and such functionality may include exchanging control signals, data, or other communications with PCD 502, either directly or via an intermediary such as relay accessory 504. In some embodiments, the communications sent and received by accessory 506 can be independent of whether an intermediary is present.

In some embodiments, accessory 506 can also provide output devices such as audio/video output device 544. In some embodiments, audio/video output device 544 can include speakers and/or connection ports for connecting external speakers or headphones; a video screen and/or a connection port for connecting an external video screen, indicator lights, or the like, together with supporting electronics (e.g., digital-to-analog or analog-to-digital converters, signal processors or the like). These components can be coupled to receive audio and/or video signals via PCD I/O interface 550. Such components can allow the user to view and/or hear output from accessory 506.

Power manager 546 can provide power management capability for accessory 506. For example, power manager 546 can be configured to receive power from a power supply 548. In some embodiments, power supply 548 can include a connection to an external power source (e.g., the standard electric grid); for example, power supply 548 can include an AC-DC converter that can be internal or external to accessory 506. In other embodiments, power supply 548 can include a battery or other energy storage device. Power manager 546 can deliver power from power supply 548 to various components of accessory 506. In addition, in some embodiments, power manager 546 can deliver power to upstream accessories via PCD I/O interface 550.

PCD I/O interface 550 can allow accessory 506 to communicate with PCD 502 (or another PCD), either directly or through an intermediary such as relay 504. In accordance with some embodiments of the invention, PCD I/O interface 550 can incorporate a USB interface. For example, PCD I/O interface 426 can provide a standard, mini, or micro USB port. In other embodiments, PCD I/O interface 426 can include a connector that can mate directly with a connector included in PCD 402, such as a 30-pin connector that mates with the connector used on various iPod^{®} products. Such a connector can be used to supply power to PCD502 or receive power from PCD 502, to receive audio and/or video signals in analog and/or digital formats, and to communicate information via various interfaces such as USB, UART, and/or FireWire.

Accessory 506 can be any electronic apparatus that interacts with PCD 502, including but not limited to any of the examples shown in FIGs. 3-4. In some embodiments, accessory 506 can provide remote control over operations of PCD 502, or a remote user interface that can include both input and output controls (e.g., a display screen). Accessory 506 in various embodiments can control any function of PCD 502 and can also receive media content from PCD 502 and present such content to the user (e.g., through audio speakers and/or video display screen, depending on the type of media content). In other embodiments, PCD 502 can control operations of accessory 506, such as retrieving stored data from a storage medium of accessory 506, initiating an image capture operation by a camera incorporated into accessory 506, etc. As noted above, communication between accessory 506 and PCD 502 can be direct or through an intermediary such as relay accessory 504, and the presence or absence of an intermediary can be transparent to accessory 506. In some embodiments, accessory 506 can also be implemented as a relay accessory with front and rear interfaces, and a further accessory (not shown) can connect to the rear interface of accessory 506.

In some embodiments, rear interface 538 of relay accessory 504 can be designed to emulate accessory I/O interface 520 of PCD 502. For example, if certain pins in a connector of accessory I/O interface 520 are specified to be grounded or connected to power in PCD 502, the corresponding pins in the connector of rear interface 538 can have the same property. Thus, from the perspective of accessory 506, a connection to relay accessory 504 can appear indistinguishable from a direct connection to PCD 502.

It will be appreciated that the system configurations and components described herein are illustrative and that variations and modifications are possible. The PCD and/or accessories (e.g., relay accessory 504 and accessory 506) may have other capabilities not specifically described herein (e.g., mobile phone, global positioning system (GPS), broadband data communication, Internet connectivity, etc.).

Connectors at the various interfaces can be complementary or not as desired. Where two connectors are not complementary, an adapter can be provided to connect the two devices. While connectors may be described herein as having pins, a term generally associated with conventional electronic devices having wires to connect components, it is to be understood that other signal paths (e.g., optical signaling) can be substituted. Further, in some embodiments, some of the connections can be wireless, and connectors can be omitted where wireless interfaces are provided.

Further, while the PCD and accessories are described herein with reference to particular blocks, it is to be understood that these blocks are defined for convenience of description and are not intended to imply a particular physical arrangement of component parts. Further, the blocks need not correspond to physically distinct components. Blocks can be configured to perform various operations, e.g., by programming a processor or providing appropriate control circuitry, and various blocks might or might not be reconfigurable depending on how the initial configuration is obtained. Embodiments of the present invention can be realized in a variety of apparatus including electronic devices implemented using any combination of circuitry and software.

Accessory I/O interface 520 of PCD 502 and PCD I/O interface 550 of accessory 506 allow PCD 502 to be connected with accessory 506 and subsequently disconnected from accessory 506 (such a direct connection is not shown). Similarly, accessory I/O interface 520 of PCD 502 and front interface 536 of relay accessory 504 allow PCD 502 to be connected with relay accessory 504 and subsequently disconnected from relay accessory 504. Rear interface 538 of relay accessory 504 and PCD I/O interface 550 of accessory 506 allow relay accessory 504 to be connected with accessory 506 and subsequently disconnected from accessory 506. When relay accessory 504 and accessory 506 are connected and relay accessory 504 is also connected to PCD 502 via front interface 536, an indirect communication channel is open between accessory 506 and PCD 502. As noted above, from the perspective of accessory 506, an indirect connection to PCD 502 via relay accessory 504 can be indistinguishable from a direct connection to PCD 502.

As used herein, a PCD and an accessory, or two accessories, are "connected" whenever a communication channel is established between their respective mating interfaces and "disconnected" when the channel is terminated. Such connection can be achieved via direct physical connection, e.g., with mating connectors; indirect physical connection, e.g., via a cable; and/or wireless connection, e.g., via Bluetooth. Further, as shown in FIG. 5, accessories can be indirectly connected to a PCD via a relay accessory.

In some embodiments, a PCD and an accessory can communicate while connected (directly or via a relay) by exchanging commands and data according to a PCD accessory protocol, also referred to herein as an "accessory protocol." The commands and data can be communicated, e.g., using any wired or wireless transport medium provided by the relevant interfaces. Where the accessory and PCD communicate via an intermediary such as relay accessory 504, the communication takes place across multiple links, e.g., a link from PCD I/O interface 550 of accessory 506 to rear interface 538 of relay accessory 504, then a link from front interface 536 of relay accessory 504 to accessory I/O interface 520 of PCD 502. Communication in the reverse direction via these links is also possible. In some embodiments, each link uses the same transport, but this is not required. Each link can use the accessory protocol.

The accessory protocol defines a format for messages to be exchanged between PCD 502 and any accessories connected thereto. For instance, the accessory protocol may specify that each message (also referred to herein as a command) is sent in a packet with a header and an optional payload. The header provides basic information (e.g., a start indicator, length of the packet, and a command code identifying a command to be processed by the recipient), while the payload provides any data associated with the command; the amount of associated data can be different for different commands, and some commands may provide for variable-length payloads. In some embodiments, the commands may be defined such that any particular command code is valid in only one direction. The packet can also include error-detection or error-correction codes as known in the art.

The accessory protocol can define a number of "lingoes," where a "lingo" is a group of related commands that can be supported (or unsupported) by various classes of accessories. In one embodiment, a command code can include a first byte identifying the lingo to which the command belongs and a second byte identifying the particular command within the lingo. Other command structures may also be used. It is not required that all accessories, or all PCDs to which an accessory can be connected, support every lingo defined within the accessory protocol.

In some embodiments, every accessory (including accessories 502, 504) and every PCD 502 that use the accessory protocol support at least a "general" lingo that includes commands common to the PCD and all accessories. The general lingo can include commands enabling the PCD and the accessory to identify and authenticate themselves to each other and to provide general information about their respective capabilities, including which (if any) other lingoes each supports. The general lingo can also include authentication commands that the PCD can use to verify the purported identity and capabilities of the accessory (or vice versa), and the accessory (or PCD) may be blocked from invoking certain (or all) commands or lingoes if the authentication is unsuccessful.

A PCD accessory protocol can also include various other lingoes, such as a simple remote lingo that allows an accessory to send a command indicating a function of the PCD to be invoked, a remote user interface lingo that can be used to communicate commands and data related to replicating all or part of a user interface of a PCD on an accessory (thereby supporting a more advanced remote control), a tuner lingo that allows a user to control a tuner accessory by operating the PCD and/or to control a tuner in the PCD by operating an accessory, a storage lingo that allows an accessory to store data on the PCD, and so on. Any lingo or combination of lingoes or other commands or groups of commands can be used in connection with an accessory protocol.

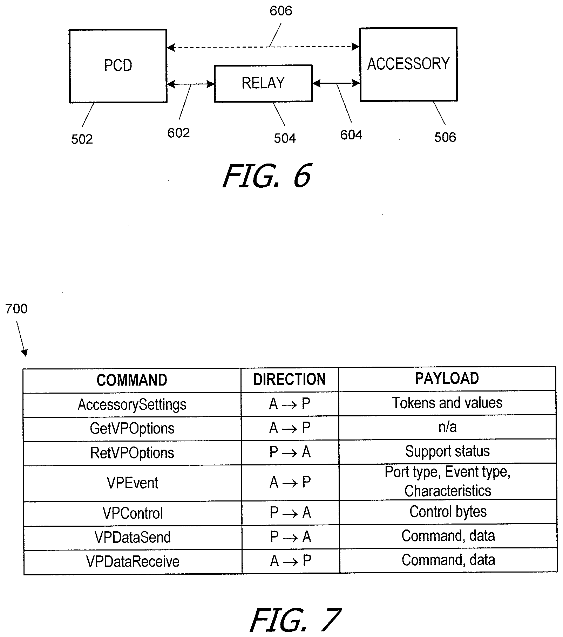

As previously noted, and as described below, a relay accessory such as relay 504 can interoperate with PCD 502 and also provide a connection to another accessory 506. FIG. 6 illustrates an operating principle of an embodiment of the present invention. PCD 502 is connected to relay 504 via a physical port 602, and relay accessory 504 is connected to accessory 506 via a physical port 604. In one embodiment, physical port 602 can be implemented using accessory I/O interface 520 of PCD 502 and front interface 536 of relay 504, and physical port 604 can be implemented using rear interface 538 of relay 504 and PCD I/O interface 550 of accessory 506.

Through physical ports 602 and 604, a virtual port 606 is created for communication between accessory 506 and PCD 502. Accessory 506 can send commands or other signals to PCD 502 using virtual port 606 by sending the commands or other signals to relay accessory 504 via physical port 604. In some embodiments, accessory 506 can send exactly the same commands and signals that it would send directly to PCD 502. Relay accessory 504 detects signals from accessory 506 and forwards them to PCD 502 via physical port 602 in such a fashion that PCD 502 can determine that the signals originated from accessory 506 rather than relay accessory 504. Similarly, PCD 502 can send commands or other signals to accessory 506 by sending them to relay accessory 504 via physical port 602 in such a fashion that relay accessory 504 can determine that the signals should be delivered to accessory 506. Relay accessory 504 can forward such signals via physical port 604 in such a fashion that they appear to accessory 506 to have come directly from PCD 502. As a result, accessories designed to operate directly with PCD 502 can also operate indirectly through relay accessory 504.

Concurrently with implementing virtual port 606, relay accessory 504 can also interact with PCD 502, invoking functionality of PCD 502 and/or having its own functionality invoked by PCD 502, generally independently of accessory 506. For example, relay accessory 504 can send commands or other signals to PCD 502 via physical port 602 in such a fashion that PCD 502 can determine that the signals originated from relay accessory 504. Similarly, PCD 502 can send commands or other signals to relay accessory 504 via physical port 602 in such a fashion that relay accessory 504 can determine that it should process these signals itself rather than forwarding them to accessory 506. Such operations between PCD 502 and relay accessory 504 can be transparent to accessory 506.

In some embodiments, PCD 502 can have the capability of making it appear that port 602 is decoupled from relay 504 even while the physical connection is maintained. For example, a connector between PCD 502 and relay 504 can include a pin or signal contact that is normally grounded (or held in some other specified state) by PCD 502. PCD 502 can allow this pin to float; when relay 504 detects that the pin is floating, it infers that no connection is present on port 602.

Likewise, relay 504 can also have the capability of making it appear that port 604 is decoupled from accessory 506 even while the physical connection is maintained. For example, a connector between relay 504 and accessory 506 can include a pin or signal contact that accessory 506 expects to be grounded (or held in some other specified state) by a PCD when a PCD is connected to accessory 506. Relay 504 can allow this pin to float; when accessory 506 detects that the pin is floating, it infers that no connection is present on port 604.

It is to be understood that the term "accessory" as used herein refers to any electronic device capable of being connected to and interoperating with a PCD. The term "relay" (or "relay accessory") as used herein refers generally to any accessory that also provides an additional connection interface for another accessory. Thus, a relay is a type of accessory, but not all accessories need be relays.

In some embodiments, virtual port 606 of FIG. 6 is implemented using commands of the accessory protocol exchanged between PCD 502 and relay accessory 504. FIG. 7 is a table 700 listing commands related to providing a virtual port according to an embodiment of the present invention. These commands can be implemented as part of a PCD accessory protocol, in the general lingo or another lingo as desired. In table 700, the direction of each command is indicated as A → P (for commands sent by an accessory to a PCD) or P → A (for commands sent by a PCD to an accessory). The payload refers to any parameters or data associated with each command.

In some embodiments, an *AccessorySettings* command can be sent by an accessory to a PCD to provide information about its characteristics. The *AccessorySettings* command can be a general-lingo command for providing information about the accessory's capabilities, preferences, and/or settings, including but not limited to whether the accessory is capable of operating as an intermediary or relay in a daisy chain configuration. The payload of the *AccessorySettings* command can include a token identifying the type of information being provided and a descriptor associated with the token that carries the specific information. For example, in the case of a relay capabilities token, the associated descriptor can include information indicating whether the accessory has a rear interface 538 that can be used to connect another accessory, thereby providing a virtual port. Other tokens and descriptors can be included in the payload of the *AccessorySettings* command, including tokens related to display capabilities, audio capabilities, accessory input device capabilities, etc.

The *GetVPOptions* command can be sent by relay accessory 504 to PCD 502 to determine whether PCD 502 supports virtual port behavior, in particular, communication with multiple connected accessories in a daisy chain. The *RetVPOptions* command can be sent in response by PCD 502 with a byte code indicating whether PCD 502 supports virtual port behavior. In some embodiments, if relay accessory 504 is connected to a PCD that does not support virtual port behavior, relay accessory 504 can disable its rear interface 538.

The *VPEvent* command can be sent by relay accessory 504 to PCD 502 to notify PCD 502 of the status of rear interface 538. The payload of the *VPEvent* command can include a port type indicator, an event type indicator, and a structured bit field associated with the indicated port type and event type. The port type indicator can be used to specify the type (or types) of signals that relay accessory 504 can exchange with accessory 506. For example, if the accessory protocol specifies UART and USB as optional transport mechanisms, relay accessory 504 can indicate to PCD 502 whether it can forward each of these signal types.

The event type indicator can be used to specify what type of information about the port state is being communicated. For example, in some embodiments, the accessory protocol provides that the connector includes a pair of identification pins that can be used by the PCD to identify the type of connected accessory based on a resistance applied across the identification pins by the accessory. When accessory 506 connects to rear interface 538 of relay accessory 504, relay accessory 504 can measure the resistance across the identification pins and report the resistance value to PCD 502 using an "accessory detect" event type indicator. Similarly, when an accessory disconnects, relay accessory 504 can send a *VPEvent* command with an "accessory detect" event type indicator and a resistance value indicating an open circuit. PCD 502 can process such commands as if it had directly measured the resistance on pins of its own connector.

As another example, in some embodiments where rear port 604 is implemented using a multi-pin connector, an accessory need not connect to all pins of that connector. For example, if the connector includes pins for a digital signal protocol such as USB or FireWire but a particular accessory does not use these protocols, the corresponding pins may be disconnected. Likewise, the connector can include various pins for providing analog and/or digital audio and video output signals from the PCD or delivering such signals to the PCD. If a particular accessory does not use audio or video signaling or a particular format associated with certain pins, these pins may be disconnected.

In such embodiments, when accessory 506 connects to rear interface 538, relay accessory 504 can determine which pins are actually connected and report the information to PCD 502 using a *VPEvent* command with a "characteristics" event type indicator. The bit field associated with this event type can include a bit mask for the various optional signals, allowing relay accessory 504 to indicate which signal pins are or are not connected through to accessory 506. In embodiments where relay accessory 504 itself does not support connections on all pins, the same bit mask can be used with the bits for any unsupported pins set to the disconnected state regardless of whether the lack of support is within relay 504 or due to accessory 506. In some embodiments, relay accessory 504 can selectively connect or disconnect some of the signal paths from its front port 602 to its rear port 604, and the "characteristics" event type can include a data field indicating which signals are selectively connectable.

In some embodiments, relay accessory 504 can send a *VPEvent* command upon establishing that PCD 502 supports virtual port behavior to provide the initial status of rear port 604; relay accessory 504 can send subsequent *VPEvent* commands asynchronously to notify PCD 502 of status changes, e.g., if an accessory connects or disconnects.

The *VPControl* command can be sent by PCD 502 to instruct relay accessory 504 to set its rear port 604 to a desired state. For example, PCD 502 can instruct relay accessory 504 to enable or disable rear port 604, or to change the state of any selectively connectable signal paths. Thus, for example, PCD 502 can instruct relay accessory 504 to connect an audio out signal path to rear port 604 or disconnect the audio out signal path from rear port 604.

The *VPDataSend* command can be sent by PCD 502 to instruct relay accessory 504 to forward a command of the accessory protocol "downstream" to a connected accessory. The payload of the *VPDataSend* command can include the command to be forwarded plus any associated data. In some embodiments, the payload can also include other components of a complete accessory protocol packet (e.g., packet header, start byte, error correction code); relay accessory 504 can simply forward the payload as received to accessory 506. In other embodiments, the payload includes only the command and data, and relay accessory 504 can generate the surrounding packet structure before forwarding the packet to accessory 506. In either case, accessory 506 can receive a standard accessory protocol packet just as it would if directly connected to a PCD. In some embodiments, relay accessory 504 does not read or process the payload of a *VPDataSend* command. It simply unpackages the *VPDataSend* packet and transmits the payload to the accessory.

The *VPDataReceive* command can be sent by relay accessory 504 to forward an accessory protocol packet containing a command (and possibly associated data) "upstream" from accessory 506 to PCD 502. The payload can include the command being forwarded plus any associated data. In some embodiments, relay accessory 504 forwards the received packet intact (including, e.g., header, start byte, error correction code) as the payload of the *VPDataReceive* command; in other embodiments, relay accessory 504 can extract the received packet's command and data and include this information in the payload of the *VPDataReceive* command. In some embodiments, relay accessory 504 does not read or process any commands sent by accessory 506; it simply packages them into *VPDataReceive* commands and forwards them to PCD 502. Thus, accessory 506 need not specify a destination for any command it sends.

It will be appreciated that the commands described herein are illustrative and that variations and modifications are possible. In one embodiment, the *AccessorySettings* command is part of the general lingo while the other commands are part of a virtual port lingo associated with virtual port functionality.

In some embodiments, each forwarded command to or from accessory 506 is encapsulated in a single *VPDataSend* or *VPDataReceive* command packet. In other embodiments, the commands being forwarded to or from the accessory can be treated as a byte stream, and a *VPDataSend* or *VPDataReceive* command packet may include part of a forwarded command, parts of two forwarded commands, or all of one forwarded command and part of another; that is, the number of *VPDataSend* or *VPDataReceive* commands need not match the number of commands communicated to or from accessory 506.

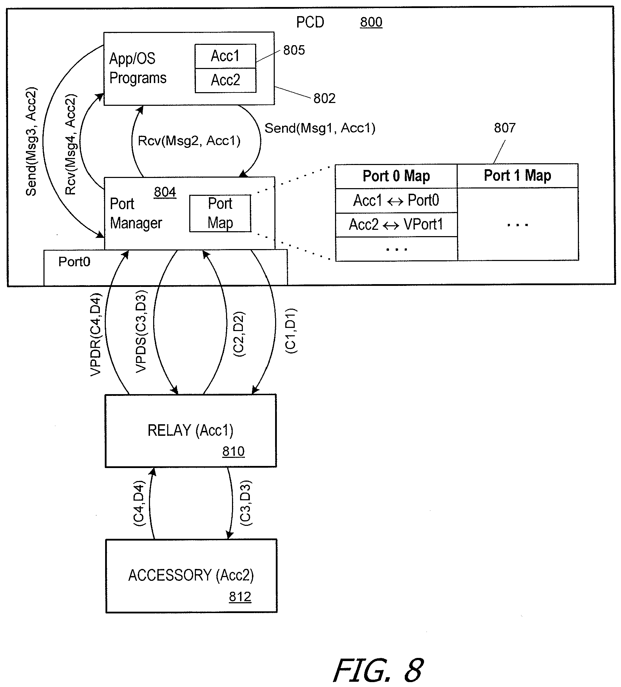

The *VPDataSend* and *VPDataReceive* commands can allow PCD 502 to recognize relay accessory 504 and accessory 506 as distinct entities and conduct communication independently with each. FIG. 8 illustrates message passing among PCD 800, relay 810 and another accessory 812 according to an embodiment of the present invention.

In this embodiment, PCD 800 (e.g., implementing PCD 100 or PCD 502) executes application and operating system (OS) programs 802. In some embodiments, the OS programs can include application program interfaces (APIs) that applications can use to invoke OS functionality, and the software may be designed with multiple abstraction layers such that OS implementation details are hidden from the application layer. Some of the OS functions may entail communicating with a connected accessory. Such communication is managed through port manager 804, which generates bit sequences to be sent via the communication channel to the accessory. (The physical layer of the communication channel is not shown in FIG. 8.).

In the embodiment of FIG. 8, OS programs (and/or applications) 802 can maintain a table 805 of connected accessories. The table can include various information about each connected accessory, e.g., an identifier ("Acc1" and "Acc2" in this example), capability and settings information, and the like. OS or application programs 802 can treat relay accessory 810 connected via a physical port and accessory 812 connected via a virtual port provided by relay 810 as two distinct accessories, without knowing whether the connection is via physical or virtual port. Messages from OS or application programs 802 can be directed to either accessory.

Port manager 804 maintains a port map 807 that in this example associates the identifier Acc1 with a physical port "Port0" (the physical port that relay 810 is connected to) and the identifier Acc2 with a virtual port "VPort1" associated with physical port Port0. Thus, identifier Acc1 is mapped to relay 810 and identifier Acc2 is mapped to accessory 812. It should be noted that in order to communicate with relay 810 and accessory 812, OS and application programs 802 do not need information as to which accessory is directly connected, only that two accessories are present.

To communicate with relay 810, an OS (or application) program 802 can send a message *Send*(*Msg1, Acc1*) to port manager 804, where Msg1 represents the information to be communicated to relay 810. Port manager 804 determines an accessory protocol command C1 and associated data D1 to represent the message Msg1. Based on port map 807, port manager 804 sends the protocol packet (C1,D1) to relay 810 on the physical port Port0.

Similarly, relay 810 can send an accessory protocol packet (C2,D2) to PCD 800. When port manager 804 receives the protocol packet (C2,D2) on the physical port Port0, it determines from port map 807 that the packet is associated with Acc1. Port manager 804 extracts the payload, determines a corresponding message (Msg2) for OS (or application) program 802, and sends a message *Rcv*(*Msg2, Acc1*) to OS program 802. OS program 802 can recognize the message *Msg2* as coming from Acc1 and process the message accordingly.

To communicate with accessory 812, OS (or application) program 802 can send a message *Send*(*Msg3*, *Acc2*) to port manager 804, where Msg3 represents the information to be communicated. Port manager 804 can determine an accessory protocol command C3 and associated data D3 to represent the message Msg3. Based on port map 807, port manager 804 can determine that the message should be sent on the virtual port VPort1. Accordingly, port manager 804 can package the accessory protocol packet (C3,D3) into a *VPDataSend* packet (abbreviated "VPDS" in the drawings) and send the *VPDataSend* packet to relay 810. Relay 810 can extract the payload (C3,D3) and forward the payload as an accessory protocol packet to accessory 812.

Similarly, accessory 812 can send an accessory protocol packet (C4,D4) to relay 810. Relay 810 can package the accessory protocol packet (C4,D4) into a *VPDataReceive* packet (abbreviated "VPDR" in the drawings) and send the *VPDataReceive* packet to port manager 804 on the physical port Port0. Port manager 804 recognizes that a *VPDataReceive* packet was received on port 0 and determines, based on the presence of the *VPDataReceive* wrapper and port map 807, that the message originated from accessory 812 rather than relay 810. Port manager 804 extracts the payload - command C4 and data D4 - from the *VPDataReceive* command, determines a corresponding message (Msg4) based on command C4 and data D4, and sends a message *Rcv*(*Msg4*, *Acc2*) to OS program 802. OS program 802 can recognize Msg4 as coming from Acc2 and can process the message accordingly.

As noted above, although FIG. 8 illustrates a case where commands to or from accessory 812 are each encapsulated in a single *VPDataSend* or *VPDataReceive* command, this is not required; any number of *VPDataSend* or *VPDataReceive* commands can be used to communicate a single command to or from the accessory.

Thus, PCD 800 can determine the source and destination of communications, enabling separate communication with relay 810 and accessory 812. In some embodiments, PCD 800 can have multiple physical ports, and one or more virtual ports can be associated with each physical port. For example, as suggested in FIG. 8, port map 807 can be expanded to include each physical port and any virtual port(s) associated with each physical port.

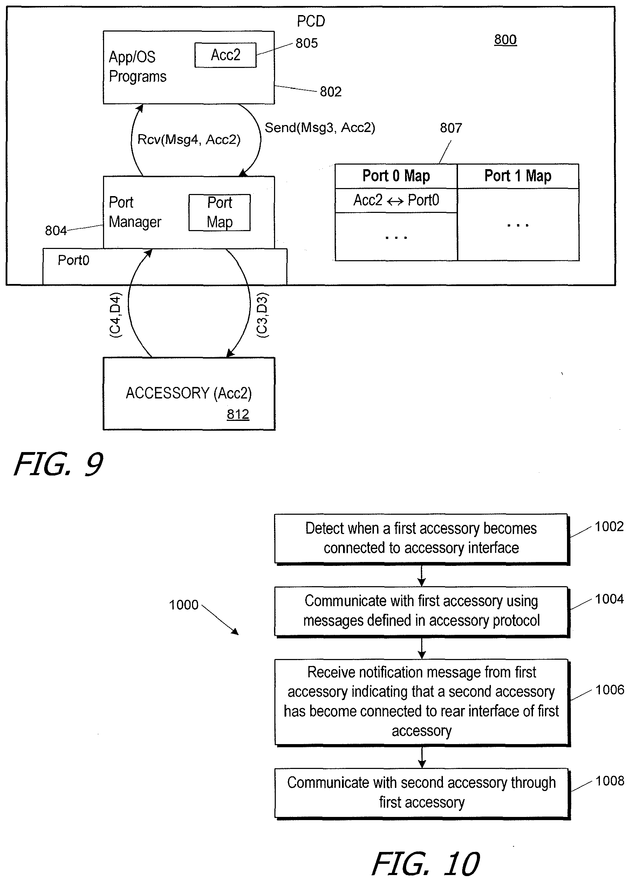

It should be noted that accessory 812 need not be notified as to whether it is communicating directly with PCD 800 or using a virtual port. By way of further demonstrating this point, FIG. 9 illustrates message passing for the case where accessory 812 is connected directly to PCD 800. In this embodiment, OS program 802 can send a message *Send(Msg3, Acc2*) to port manager 804. Port manager 804 determines from port map 807 that Acc1 is connected on physical port Port0, determines an accessory protocol command C3 and associated data D3, and sends the accessory protocol packet (C3,D3) to accessory 812 on physical port Port0.

Similarly, accessory 812 can generate an accessory protocol packet (C4,D4) and send it directly to PCD 800 on physical port Port0. Port manager 804 determines from port map 807 that the received packet originates from Acc2, extracts the payload, determines a corresponding message (Msg4), and sends a message *Rcv*(*Msg4, Acc2*) to OS program 802.

Comparing FIGs. 8 and 9 shows that in either instance, accessory 812 can operate in the same manner, reading incoming accessory protocol packets from the PCD and sending outgoing accessory protocol packets to the PCD. The indirection introduced by the virtual port provided by relay 810 is transparent to accessory 812. This allows any accessory capable of communicating directly with PCD 800 to communicate through the virtual port without modification.

The virtual port is not transparent to either the PCD (e.g., PCD 800) or the relay accessory (e.g., relay 810). FIG. 10 is a flow diagram of a process 1000 that can be executed by a PCD to communicate with two accessories according to an embodiment of the present invention. At block 1002, PCD 800 can detect when a first accessory (e.g., relay 810) becomes connected to its accessory interface. At block 1004, PCD 800 can communicate with relay 810 using messages defined in an accessory protocol. At block 1006, PCD 800 can receive a message from relay 810 indicating that a second accessory (e.g., accessory 812) has become connected to a rear interface of the first accessory. At block 1008, PCD 800 can communicate with second accessory 812 through relay 810. To communicate with second accessory 812, PCD 800 can package a message defined in the accessory protocol within a data sending command of the accessory protocol and send the data sending command to relay 812.

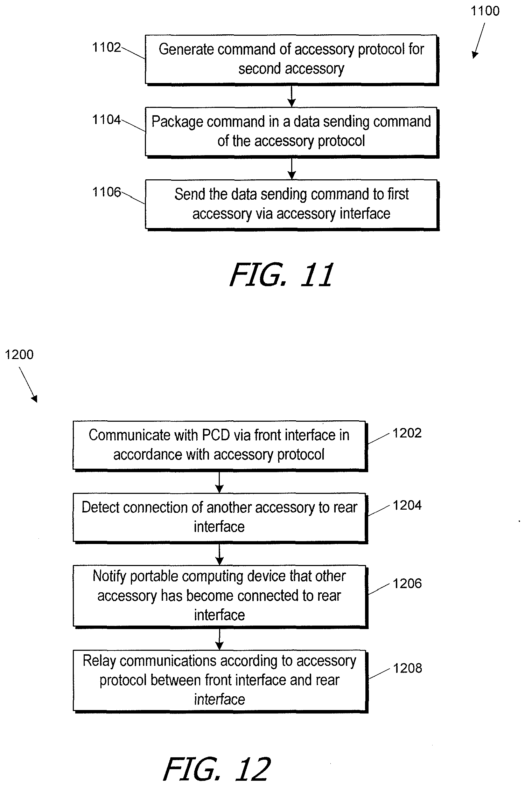

FIG. 11 is a flow diagram of a process 1100 that can be executed by PCD 800 at block 1008 to send a message to second accessory 812 according to an embodiment of the present invention. At block 1102, PCD 800 can generate a command of the accessory protocol intended for second accessory 812; generating the command can include generating and formatting any associated data (e.g., payload) At block 1104, PCD 800 can package the command (including any associated data) within a data sending command of the accessory protocol. At block 1106, PCD 800 can send the data sending command to first (relay) accessory 810 via the accessory interface. As described above, the data sending command instructs relay accessory 810 to extract the packaged command (including any associated data) and forward the extracted command (and data where applicable) to second accessory 812.

Similarly, FIG. 12 is a flow diagram of a process 1200 that can be executed by a relay accessory (e.g., relay 810) to communicate with a PCD (e.g., PCD 800) and another accessory (e.g., accessory 812) according to an embodiment of the present invention. At block 1202, relay accessory 810 can communicate with PCD 800 via its front interface, in accordance with the accessory protocol. At block 1204, relay accessory 810 can detect a connection of a second accessory (e.g., accessory 812) to its rear interface. At block 1206, relay accessory 810 can notify PCD 800 that accessory 812 has become connected to the rear interface. At block 1208, relay accessory 810 can relay communications conforming to the accessory protocol between its rear interface and its front interface, in such a manner that the presence of relay accessory 810 is transparent to accessory 812 while communications originating from accessory 812 and relayed by accessory 810 are distinguishable by PCD 800 from communications originating from accessory 810.

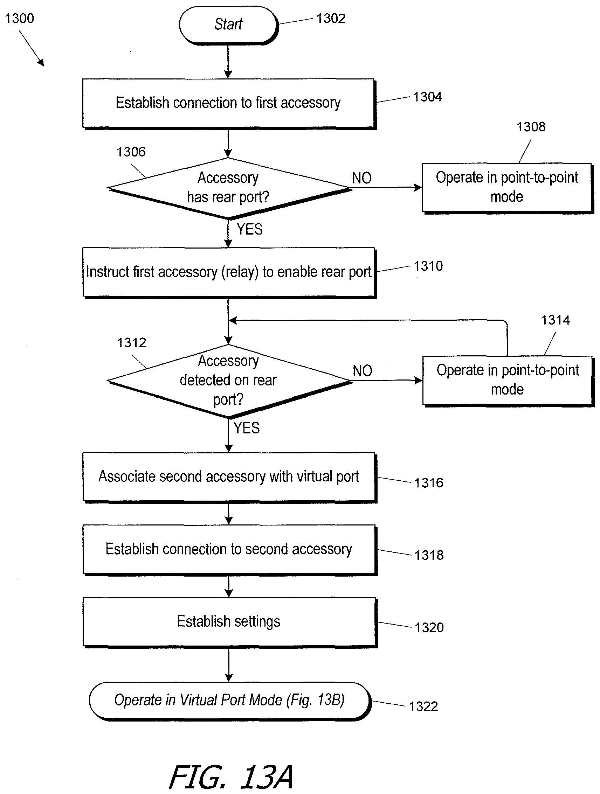

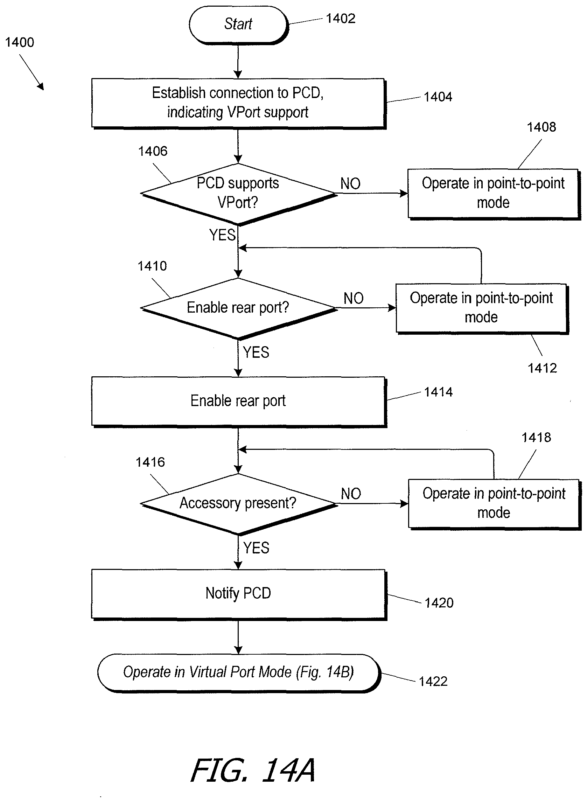

A further understanding of processes 1000 and 1200 can be had by reference to FIGs. 13A-13B and 14A-14B. FIGs. 13A-13B are flow diagrams of a process 1300 that can be executed by a PCD to interact with a relay accessory and another accessory according to an embodiment of the invention.

Process 1300 starts (block 1302 in FIG. 13A) when a first accessory becomes attached to a PCD (e.g., PCD 502 of FIG. 5). At block 1304, the first accessory establishes a connection to PCD 502. Establishing a connection can include the accessory identifying itself, e.g., using the *AccessorySettings* command described above, and can also include an authentication procedure. The identification can include requests for various preferences, e.g., whether the accessory uses audio output and/or video output from the PCD. Authentication can be cryptographic; for instance, the accessory can provide a digital certificate that PCD 502 can validate, then provide a digital signature of a random string generated by PCD 502. If identification or authentication fails, process 1300 can exit (not explicitly shown). Assuming a connection is established, at block 1306, PCD 502 determines whether the first accessory supports a rear port. For example, PCD 502 can parse the identification tokens sent by the accessory. If the accessory does not support a rear port, then at block 1308, PCD 502 can operate in point-to-point mode, i.e., without a virtual port.

If the accessory supports a rear port (in other words, the accessory is a relay such as relay 504), then at block 1310, PCD 502 can instruct relay 504 to enable its rear port, e.g., using the *VPControl* command described above. At block 1312, PCD 502 can determine whether a second accessory has been attached to the rear port of relay accessory 504. For example, PCD 502 can detect a *VPEvent* command from relay accessory 504, with a payload indicating that a second accessory has connected to the rear port. If a second accessory has not become attached, PCD 502 can operate in point-to-point mode at block 1314 until such time as a second accessory becomes connected to the rear port.

After PCD 502 detects the presence of a second accessory on the rear port at block 1312, PCD 502 can define a virtual port for the second accessory at block 1316, with the virtual port being associated with the physical port of relay accessory 504. In some embodiments, defining the virtual port can include updating port map 807 (FIG. 8). The second accessory (e.g., accessory 506) can establish its connection to PCD 502 (on a virtual port) at block 1318. The establishment of a connection can be similar to that described above and can include identification and authentication. PCD 502 and accessory 506 can exchange identification and authentication commands by communicating via relay accessory 504 using *VPDataSend* and *VPDataReceive* commands as described above. If second accessory 506 fails to identify or authenticate itself, PCD 502 can refuse further communication with accessory 506 while continuing to communicate with relay accessory 504; process 1300 can return to block 1314 to await another connection attempt (not explicitly shown).

If the connection to accessory 506 is successfully established at block 1318, then at block 1320, PCD 502 can establish various communication settings. For example, PCD 502 can send one or more *VPControl* commands to configure signal passthrough settings of relay 504. PCD 502 can also adjust other settings (e.g., video format, audio format, lingo uses, etc.) for interoperation with the connected accessories.

In some embodiments, PCD 502 can attempt to match the preferences requested by both relay accessory 504 and accessory 506 during their respective identifications. However, in some embodiments, this may not always be possible. For example, in some embodiments, PCD 502 can output only one video format at any given time. If relay accessory 504 and accessory 506 request different video formats, PCD 502 cannot accommodate both requests. As another example, some lingoes of the accessory protocol (e.g., a remote user interface lingo) may be usable by only one accessory at a time. Where relay accessory 504 and accessory 506 are each unaware of the other's requested preferences, it is possible that both devices may request the same lingo, and it may not be possible for PCD 502 to grant both requests.

Various prioritization algorithms can be used to resolve such conflicting preferences. In some embodiments, the first device to register a preference is given priority; for example, in process 1300, the dock identifies its preferences first; its preferences would prevail over conflicting preferences from the accessory. In other embodiments, the last device to register a preference is given priority. In still other embodiments, more complex prioritizing logic can be implemented, e.g., with priority based on the type of accessory, different priority rules for different categories of preferences, or the like.

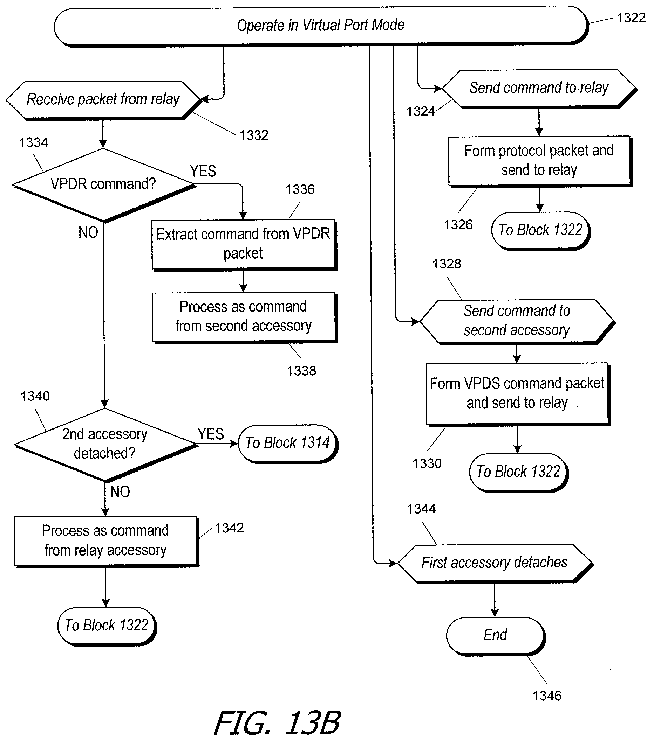

At block 1322, PCD 502 operates in virtual port mode, interacting with relay accessory 504 and accessory 506. The particular details and sequences of events in such operation depend on the specific PCD and accessories connected, as well as user input to control the operation. In various embodiments, operation of PCD 502 can include routing audio and/or video signals to accessory 506 or relay accessory 504; receiving user input or data from the user interface of PCD 502, or from accessory 506 or relay accessory 504; controlling an operation of accessory 506 or relay accessory 504; or the like. Representative cases of PCD operation in virtual port mode are shown in FIG. 13B.

One case (block 1324) arises when PCD 502 determines that a command should be communicated to relay accessory 504. When this is the case, at block 1326 PCD 502 creates a PCD packet incorporating the command and sends the packet to relay accessory 504.

Another case (block 1328) arises when PCD 502 determines that a command should be communicated to accessory 506. When this is the case, at block 1330 PCD 502 creates a *VPDataSend* command packet, with the command to the accessory in the payload, and sends the packet to relay accessory 504. In some embodiments, multiple *VPDataSend* commands can be used to communicate a single command to accessory 506.

Another case (block 1332) arises when PCD 502 receives an accessory protocol packet from relay 504. When this is the case, at block 1334 PCD 502 determines whether the packet corresponds to a *VPDataReceive* command. If so, at block 1336 a command originating from accessory 506 is extracted, and at block 1338, the command is processed in a context associated with accessory 506. In some embodiments, multiple *VPDataReceive* commands may be received in connection with a single command originating from accessory 506.

If the packet does not correspond to a *VPDataReceive* command, at block 1340 PCD 502 determines whether the packet indicates detachment of accessory 506 (e.g., a *VPEvent* command with payload indicating that accessory 506 has become detached from rear interface 538 of relay 504). If so, process 1300 can return to block 1314 until an accessory becomes attached again. Otherwise, the packet is processed in a context associated with relay accessory 504 at block 1342.

Operation of process 1300 can continue indefinitely, as long as relay accessory 504 remains connected to PCD 502. When relay accessory 504 becomes disconnected (block 1344), process 1300 can end (block 1346).

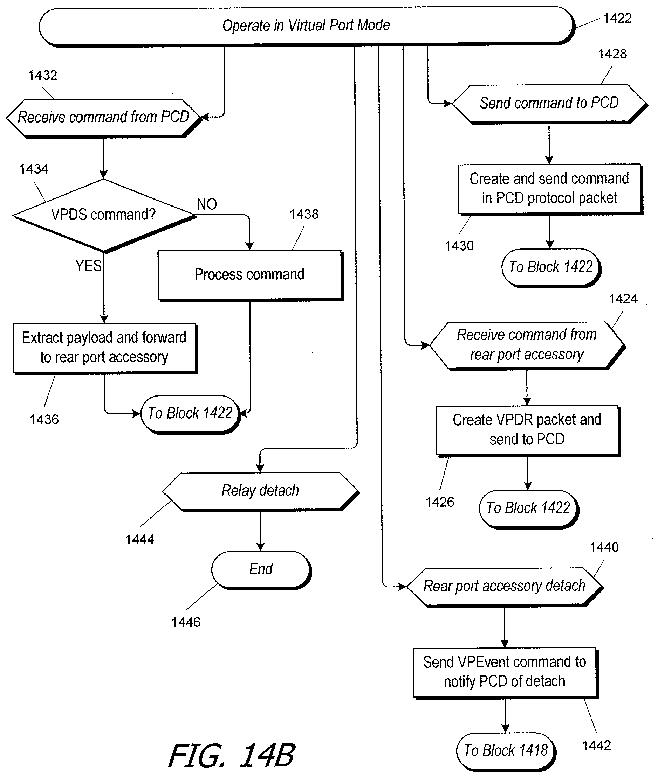

FIGs. 14A and 14B are flow diagrams of a process 1400 that can be used by a relay accessory (e.g., relay accessory 504) to interact with a PCD (e.g., PCD 502) and a second accessory (e.g., accessory 506) according to an embodiment of the present invention.

Process 1400 starts (block 1402 in FIG. 14A) when relay accessory 504 becomes attached to PCD 502. At this point, relay accessory 504 can have its rear port disabled. At block 1404, relay accessory 504 can establish a connection to PCD 502, e.g., using identification and authentication commands as described above with reference to block 1304 of process 1300. At block 1406, relay accessory 504 determines whether PCD 502 supports virtual port functionality. If not, relay accessory 504 can operate in point-to-point mode at block 1408. Rear interface 538 of relay accessory 504 can remain disabled.

If PCD 502 supports virtual port functionality, then at block 1410, relay accessory 504 determines whether the rear port should be enabled. For instance, relay accessory 504 can determine whether PCD 502 has sent a *VPControl* command with a payload indicating that the rear port should be enabled. If not, relay accessory 504 can continue to operate in point-to-point mode at block 1412 until such time as PCD 502 indicates that the rear port should be enabled. When that occurs, relay accessory 504 can respond by enabling its rear port at block 1414. In some embodiments, enabling the rear port can include providing power on a power output pin of rear interface 538. In some embodiments, as described above, relay accessory 504 can emulate physical decoupling of its rear port, e.g., by floating signals pins that would ordinarily be grounded or held in some other specified state by relay 504; in such embodiments, when the rear port is disabled, relay accessory 504 can float these pins to prevent accessory 506 from detecting a connection. When the rear port becomes enabled at block 1414, relay accessory 504 can ground or otherwise drive the floating pins to the state allowing accessory 506 to detect the connection.

Waiting for PCD 502 to authorize enabling the rear port guarantees that the rear port will not be enabled until after relay accessory 504 has established its configuration; it can also prevent errors that may occur if another accessory attempts to connect via the virtual port before PCD 502 has established the virtual port. Other implementations are also possible.

At block 1416, relay accessory 504 determines whether another accessory has connected to rear interface 538. As long as no other accessory is connected, relay accessory 504 can continue to operate in point-to-point mode (block 1418) and monitor for an accessory connection. When another accessory (e.g., accessory 506) becomes attached to rear interface 538, relay accessory 504 can notify PCD 502 at block 1420. In some embodiments, relay accessory 504 can detect and measure an accessory identifying resistance applied by the accessory across two pins of a connector in rear interface 538 and can report the measured resistance value to PCD 502. In some embodiments, relay accessory 504 may also assign a virtual port identifier to the connected accessory and provide the identifier to PCD 502.

At block 1422, relay accessory 504 operates, interacting with PCD 502 and accessory 506. The particular details and sequences of events in such operation depend on the specific PCD and accessories connected, as well as the specific functionality provided by relay accessory 504. In various embodiments, operation of relay accessory 504 can include receiving audio and/or video signals from PCD 502 and presenting corresponding sound and images on an output device (speakers, display screen, etc.) or routing the signals to the rear-port accessory; receiving user input and communicating the input to PCD 502; controlling an operation or invoking a functionality of PCD 502 (e.g., starting and stopping media playback, launching and interacting with an application program, etc.); or the like. Representative cases of relay operation in virtual port mode are shown in FIG. 14B.

One case (block 1424) arises when relay accessory 504 receives a command from accessory 506. When this is the case, at block 1426 relay accessory 504 creates a *VPDataReceive* command packet, incorporating the received command into the payload, and sends the *VPDataReceive* packet to PCD 502. In some embodiments, accessory 504 can create multiple *VPDataReceive* command packets to forward a single command packet from accessory 506.

Another case (block 1428) arises when relay accessory 504 determines that it should send a command (other than a command received from accessory 506) to PCD 502. When this is the case, at block 1430 relay accessory 504 generates an accessory protocol packet including the command and sends the command to PCD 502.

Another case (block 1432) arises when relay accessory 504 receives a command from PCD 502. At block 1434, relay accessory 504 determines whether the command is a *VPDataSend* command. If so, then at block 1436, relay accessory 504 can extract the payload from the *VPDataSend* command and send it as an accessory protocol packet to accessory 506. In some embodiments, relay accessory 504 may add packet headers, start bytes, error correction coding, or the like to make a complete accessory protocol packet. In some embodiments, the *VPDataSend* command may include one or more accessory protocol commands, partial accessory protocol commands, etc. In some embodiments, relay accessory 504 sends one accessory protocol packet for each *VPDataSend* command received; in other embodiments, relay accessory 504 can concatenate a stream of payloads of *VPDataSend* commands and send the stream as accessory protocol packets of desired size. At block 1438, if the received command is not the *VPDataSend* command, relay accessory 504 can process the command locally. If the command is a *VPControl* command, processing of the command may affect the connection path to accessory 506, but the command itself need not be forwarded to accessory 506. Other commands may have no effect on the connection path to accessory 506.

Another case (block 1440) arises when relay accessory 504 detects that accessory 506 has become detached. When this is the case, at block 1442 relay accessory 504 can send a *VPEvent* command to PCD 502 to indicate that accessory 506 is no longer attached. Thereafter, process 1400 can return to block 1416 to detect a subsequent attachment of the same accessory or a different accessory on the rear port of relay accessory 504.

Operation of process 1400 can continue indefinitely, as long as relay accessory 504 remains connected to PCD 502. When relay accessory 504 becomes disconnected (block 1444), process 1400 can end (block 1446).

It will be appreciated that the communication processes described herein is illustrative and that variations and modifications are possible. Steps described as sequential may be executed in parallel, order of steps may be varied, and steps may be modified, combined, added or omitted. For instance, the various cases depicted herein or other operating conditions can be detected using interrupts, polling or the like. In some embodiments, audio and/or video routing can be changed dynamically. For example, PCD 502 can receive a request to start or stop delivering audio signals from either relay accessory 504 or second accessory 506. In the case where the request originates from second accessory 506, PCD 502 can send a *VPControl* command to relay accessory 506 to change the routing accordingly.

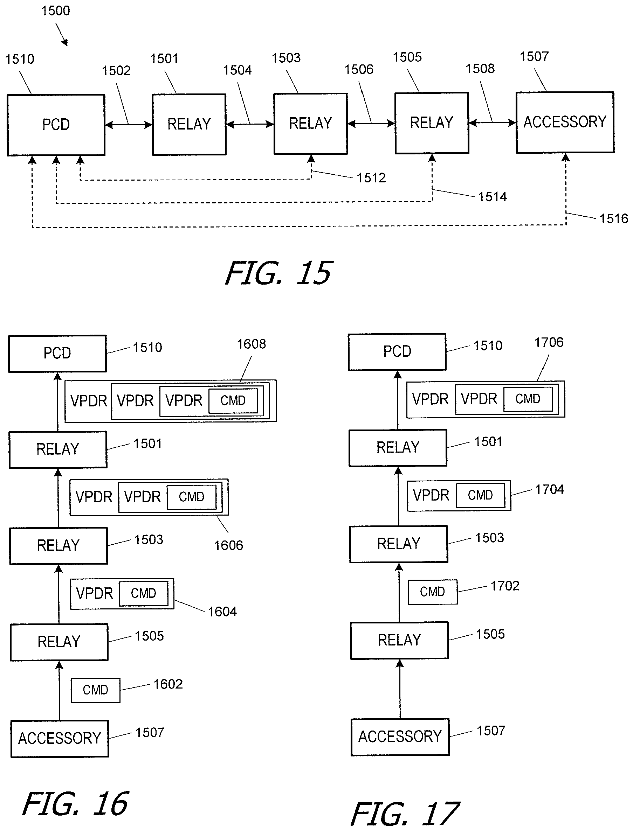

In some embodiments, a chain of connected accessories can be extended to any number of accessories by connecting a front port of one relay to a rear port of another, forming a daisy chain of arbitrary length. FIG. 15 illustrates an operating principle of an embodiment of the invention with multiple relay accessories forming a system 1500.

In FIG. 15, PCD 1510 is connected to the front interface of first relay 1501 via a physical port 1502. The rear interface of first relay 1501 is connected to the front interface of second relay 1503, providing a physical port 1504. The rear interface of second relay 1503 is connected to the front interface of third relay 1505, providing a physical port 1506. The rear interface of relay 1505 is connected to an accessory 1507, providing a physical port 1508. In this arrangement, one physical port on PCD 1510 (port 1502) supports three virtual ports. Virtual port 1512 connects PCD 1510 to second relay 1503; virtual port 1514 connects PCD 1510 to third relay 1505; and virtual port 1516 connects PCD 1510 to accessory 1507.

It should be noted that daisy chain system 1500 can operate without relays 1501, 1503, or 1505 being aware of their positions within system 1500 or of how many accessories are connected to PCD 1510. This can be accomplished by nesting *VPDataSend* and *VPDataReceive* commands as illustrated in FIGs. 16-18.

FIG. 16 illustrates propagation of a command from accessory 1507 to PCD 1510 according to an embodiment of the invention. Packet 1602, generated by accessory 1507, is an accessory protocol packet containing a command (CMD). Packet 1602 is sent to relay 1505, which packages the command CMD in a *VPDataReceive* command packet 1604 (abbreviated as "VPDR" in the drawings) and sends it up the chain to relay 1503. Relay 1503 receives packet 1604 on its rear port and packages it in a *VPDataReceive* command packet 1606, which it forwards up the chain to relay 1501. Relay 1501 packages the received packet 1606 in a *VPDataReceive* command 1608, which it forwards up the chain to PCD 1510. It should be noted that operation of relays 1503 and 1501 is unaffected by the fact that the received packet happens to contain a *VPDataReceive* command. PCD 1510 unpacks the nested *VPDataReceive* commands of packet 1608 and, by counting the number of layers, can determine that the command CMD originated from accessory 1507.

Similarly, FIG. 17 illustrates propagation of a command (CMD) from third relay accessory 1505 to PCD 1510 according to an embodiment of the invention. Packet 1702, generated by relay 1505, is an accessory protocol packet containing the command CMD. Packet 1702 is sent to relay 1503, which packages the command in a *VPDataReceive* command packet 1704 and forwards it up the chain to relay 1501. Relay 1501 packages received packet 1704 in a *VPDataReceive* command packet 1706 and forwards it up the chain to PCD 1510. Again, operation of relay 1501 is unaffected by the fact that the received packet happens to contain a *VPDataReceive* command. PCD 1510 unpacks the nested *VPDataReceive* commands and, by counting the number of layers, can determine that the command CMD originated from relay 1505.

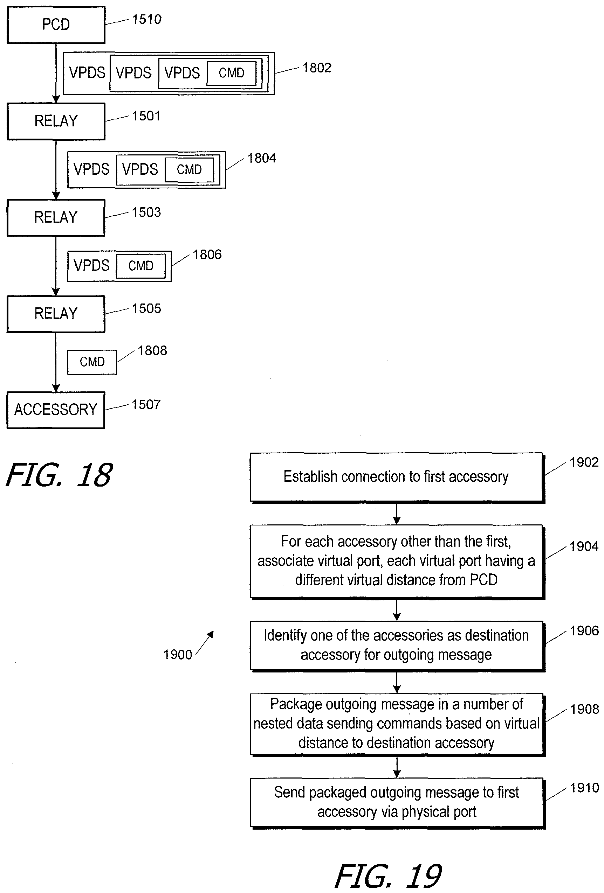

The same principle can be used by PCD 1510 to direct a command to the appropriate destination along the daisy chain. FIG. 18 illustrates propagation of a command CMD from PCD 1510 to accessory 1507 according to an embodiment of the invention. PCD 1510 generates a *VPDataSend* packet 1802 containing three nested *VPDataSend* commands (abbreviated "VPDS" in the drawing) and sends this packet to relay 1501. Relay 1501 unpackages the outermost *VPDataSend* command and forwards the payload (now containing two nested *VPDataSend* commands) as packet 1804 to relay 1503, unaffected by the fact that the payload happens to contain another *VPDataSend* command. Relay 1503 unpackages the outermost *VPDataSend* command and forwards the payload (now containing a single *VPDataSend* command) as packet 1806 to relay 1505. Relay 1505 unpackages the remaining *VPDataSend* command and forwards the final packet 1808, to accessory 1507. Similarly, PCD 1510 can direct a command to any relay by nesting the appropriate number of *VPDataSend* commands in an outgoing packet. The targeted accessory will receive a command packet that it processes; intermediaries will receive a *VPDataSend* command, unpackage it, and forward the resulting packet regardless of whether the resulting packet contains a *VPDataSend* command or another command.

To further illustrate the communication technique, FIG. 19 is a flow diagram of a process 1900 usable by a PCD (e.g., PCD 1510 of FIG. 15) to send a message to one of multiple accessories in a daisy chain configuration according to an embodiment of the present invention. At block 1902, PCD 1510 can establish a connection to a first accessory (e.g., accessory 1501) on a physical port. At block 1904, for each accessory other than the first, PCD 1510 can, upon establishing a connection, associate a virtual port with that accessory; each virtual port can be associated with the physical port and can be assigned a different virtual distance from PCD 1510. Thus, for example, a virtual port for accessory 1503 can have a virtual distance of 1; for accessory 1505, a virtual distance of 2; and for accessory 1507, a virtual distance of 3. At block 1906, PCD 1510 can identify one of the accessories as a destination accessory for an outgoing message. At block 1908, PCD 1510 can package the outgoing message in a number of nested data sending commands, with the number being determined based on the virtual distance of the destination accessory. For the virtual distance assignments given above; the number can be equal to the virtual distance; if the first accessory is the destination, the number can be zero. At block 1910, PCD 1510 can send the packaged outgoing message to first accessory 1501 via the physical port. As described above, accessory 1501 can read the outermost command, determine whether it is the data sending command, and either process or forward the packet depending on the determination.

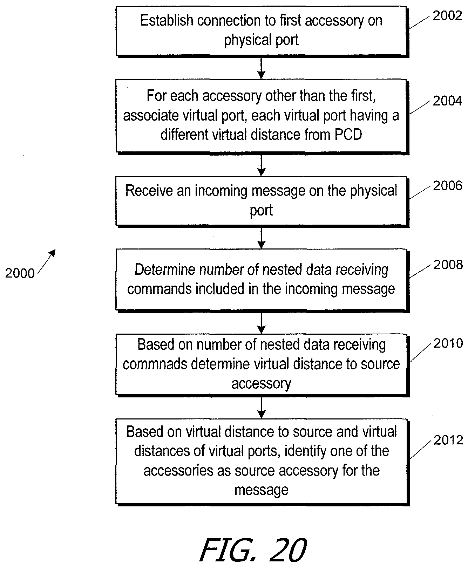

FIG. 20 is a flow diagram of another process 2000 usable by a PCD (e.g., PCD 1510 of FIG. 15) to receive a message from one of multiple accessories in a daisy chain configuration according to an embodiment of the present invention. At block 2002, PCD 1510 can establish a connection to a first accessory (e.g., accessory 1501) on a physical port. At block 2004, for each accessory other than the first, PCD 1510 can, upon establishing a connection, associate a virtual port with that accessory; each virtual port can be associated with the physical port and can be assigned a different virtual distance from PCD 1510. These blocks can be implemented similarly or identically to blocks 1902 and 1904 of process 1900. At block 2006, PCD 1510 can receive an incoming message on the physical port. At block 2008, PCD 1510 can determine the number of nested data receiving commands included in the incoming message. At block 2010, PCD 1510 can determine a virtual distance based on the number of nested data receiving commands. At block 2012, PCD 1510 can identify one of the accessories as a source of the message, based on determined virtual distance and the virtual distances associated with the various virtual ports. For the virtual distance assignments given above (in the description of FIG. 19), if the number of data receiving commands is zero, then first accessory 1201 can be identified as the source. Thereafter, PCD 1510 can process the message based on the identity of the source port.

It is to be understood that processes 1900 and 2000 can be combined to support bidirectional communication. A PCD can thus receive a message from any accessory at any time and send a message to any accessory at any time. Further, while a daisy chain configuration has been described for a single physical port, in some embodiments, a PCD can have multiple physical ports, and a separate set of virtual ports can be associated with each physical port. In that case, a source or destination accessory can be identified by reference to a physical port and a virtual distance from the physical port.

As these examples illustrate, none of accessories 1501, 1503, 1505, 1507 requires any information about its position in the chain. PCD 1510 uses information about the ordering of the connected devices in the chain to associate each device with a suitable number of levels of nesting. Where process 1400 of FIG. 14 is implemented in the various relays, each relay identifies itself to PCD 1510 before allowing any further device to connect on its rear interface; as a result, PCD 1510 can determine the number of levels of nesting associated with each connected accessory based on the order in which the accessories identified themselves.

The daisy chain system described herein can be extended to connect any number of accessories to a PCD. While the accessories (including relays) in this embodiment do not communicate with each other directly, indirect communication is possible, as the PCD may act on one connected accessory in response to a command from another connected accessory. For instance, referring to FIG. 4, dock 200 can receive user input via keyboard 204 and send the input to PCD 100 using a command (e.g., a *KeyEvent* command) of the PCD accessory protocol. PCD 100 can interpret the user input as an instruction to operate camera 400 and can send a command to camera 400 using the *VPDataSend* command described above.

Depending on implementation, various factors may limit the maximum length of a daisy chain. One such factor is response latency. For example, the accessory protocol may include commands that require a response from the other device. (In some embodiments, every command requires a response; the responding device may send an acknowledgement command if no other response is required by a particular command.) A device (PCD or accessory) that is awaiting a response may be configured to time out if the response is not received within a specified period, generating an error condition. Each link in the daisy chain will generally add latency to command propagation, and if the round trip latency becomes comparable to the timeout period, errors can occur.

Other limiting factors in some embodiments relate to packet size and bandwidth constraints. As shown in FIGs. 16-18, longer daisy chains may require larger packets, consuming more of the available bandwidth. In addition, as the number of communicating devices in the chain increases, demand for bandwidth on the physical channels between devices can also be expected to increase. At some point, adding another device can lead to reduced performance due to heavy demand on the physical channel.

It is to be understood that such limitations are largely dependent on design choices. In designing a system, the maximum packet size, bandwidth of the channel, and/or timeout parameters can be selected based on the longest daisy chain the system is intended to support. In some embodiments, timeout periods or other parameters can be adjustable in software. For example, the PCD can determine how many accessories are connected and send commands of the accessory protocol to some or all connected accessories to instruct the devices to adjust their latency constraints based on the number of connected accessories.

As described above, a PCD and multiple accessories connected in a daisy chain topology can communicate by exchanging messages (e.g., commands and/or data), allowing each accessory to interact with the PCD largely independently of any other accessories that may be present. In fact, as noted, the presence of upstream accessories can be completely transparent to a downstream accessory; intermediary accessories can detect that at least one downstream accessory is present but need not have detailed information as to how many downstream accessories are present or what functionality such accessories provide.

In some cases, messages from different accessories may potentially create conflicting or incompatible demands on the PCD; for example, two accessories might ask for incompatible settings or for different media assets to be played at the same time or the like. To prevent conflicts, in some embodiments, the PCD can restrict access to certain functionality to only one of the connected accessories.

For example, in some embodiments, the accessory communication protocol provides a number of lingoes, or groups of related commands (e.g., as described above). When an accessory connects to a PCD, the accessory can be required to register for each lingo it will use while connected; identification of lingoes to be registered can be included in the *AccessorySettings* command described above or in another command. In some embodiments, the PCD can be configured (e.g., by programming) to limit registration for certain lingoes such that only one accessory at a time can be registered for a particular lingo. For example, the first accessory to register for a particular lingo can be granted access, while any subsequent accessories will be denied access as long as the first accessory remains connected. Where access to a lingo is denied, the PCD can send an error message to the accessory or simply ignore any commands of that lingo that originate from an accessory that did not successfully register.

In various embodiments, a PCD can limit registration for any or all lingoes it supports. For example, lingoes whose commands are likely to create conflicts (e.g., a lingo for remotely controlling media asset selection and playback) can be restricted to a single accessory while other lingoes (e.g., a lingo for providing GPS data from the PCD to an accessory) remain unrestricted and thus available to any connected accessory. Where the accessory protocol includes a general lingo to support identification, authentication, and exchange of general information about capabilities and preferences, the general lingo can remain unrestricted.

In addition to message-based communication, in some embodiments, a PCD can deliver media signals (e.g., audio and/or video) in various formats to an accessory. Some relay accessories can provide routing functionality to selectively deliver media signals from the PCD to a local output section or to the relay's rear port.

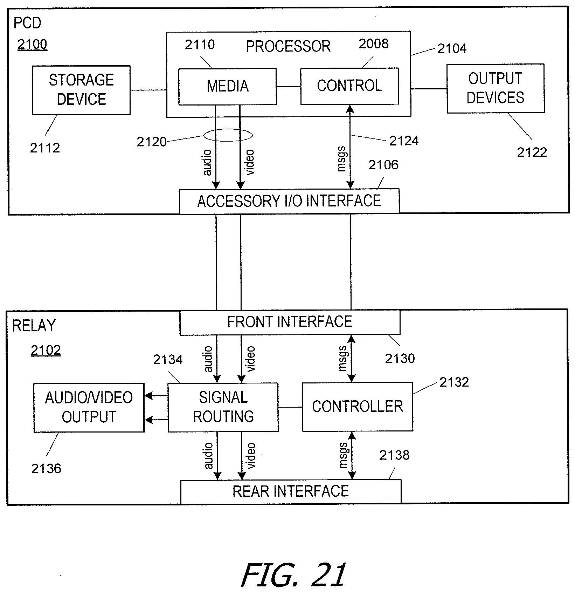

FIG. 21 is a simplified block diagram of a PCD 2100 and a relay accessory 2102 showing routing of media signals according to an embodiment of the present invention. PCD 2100 includes processor 2104, accessory I/O interface 2106, storage device 2112, and output device(s) 2122. These components can be generally similar to components described above with reference to FIG. 5.

Processor 2104 in this embodiment includes control section 2108 and media section 2110. Control section 2108 can execute program code to control operations of PCD 2100, while media section 2110 is dedicated to processing of media content. For example, media section 2110 can read stored media content in a digital format from storage medium 2112 and convert the stored media content to analog or digital signal streams on output paths 2120. (Although shown as a single line, each output path 2120 can include multiple wires.) Media section 2110 can support multiple different signal formats. For example, in the case of video signals, media section 2110 can be capable of delivering signals conforming to different standard formats NTSC, PAL, HD (in various formats such as 780p, 1080i, 1080p), and the like. For some video formats, media section 2110 can support different aspect ratios (e.g., "full screen" aspect ratio of 4:3 or "wide screen" aspect ratio of 16:9). Media section 2110 can also adapt the signals on output path 2120 to conform to different physical transport standards, such as HDMI, S-Video, component video, and so on. Accordingly, media section 2110 can include digital signal processors, digital-to-analog converters, encoders, decoders, transcoders, driver circuits and the like.

Media section 2110 can route the signal streams it generates to accessory I/O interface 2106 via paths 2120. In some embodiments, media section 2110 can also route the signal streams to output devices 2122 (e.g., display screen, speakers) within PCD 2100 or to dedicated media output ports of PCD 2100 (not explicitly shown). Routing can be controlled by control section 2108 in response to program instructions and can depend in part on the presence and type of connected accessory or accessories.

Control section 2108 can communicate with accessories via accessory I/O interface 2106 using message path 2124, which can be physically distinct from audio and video paths 2120. Such communication can be implemented using techniques described above and can include communications from various accessories regarding media signal preferences. For example, a connected accessory can request analog or digital audio and/or analog or digital video from PCD 2100; the accessory can also specify the preferred format for signals to be delivered. Control section 2108 can arbitrate these requests and select the formatting and routing to be used. Control section 2108 can communicate the selections to media section 2110 and also to the connected accessory or accessories, such as relay accessory 2102.

Relay accessory 2102, which can be generally similar to other relay accessories described herein, can include a front interface 2130, controller 2132, signal routing logic 2134, audio/video output section 2136, and rear interface 2138. Front interface 2130 can receive audio and video signals from accessory I/O interface 2106 of PCD 2100 and can also exchange messages with PCD 2100 through the same interface (e.g., using different pins of a multi-pin connector).

Controller 2132 can process received messages and generate control signals to other components of relay 2102. Controller 2132 can also generate outgoing messages in the accessory protocol, e.g., as described above. Outgoing messages can be sent upstream via front interface 2130 or downstream via rear interface 2138.

Signal routing logic 2134 can receive audio and video signals from front interface 2130 and route them to audio/video output section 2136 (which can be generally similar to audio/video output section 544 of FIG. 5) or to rear interface 2138. In some embodiments, signal routing logic 2134 can deliver the same signals to both audio/video output section 2136 and rear interface 2138. Signal routing logic 2134 can be implemented using conventional circuitry to selectively route signals onto various available paths. Operation of signal routing logic 2134 can be controlled by controller 2132 in response to messages received from PCD 2100. For example, PCD 2100 can send the *VPControl* command described above to indicate whether audio or video should be routed to rear interface 2138.

While FIG. 21 shows only one accessory (relay 2102) connected to PCD 2100, it is to be understood that any number of accessories can be connected in a daisy chain (e.g., as described above). PCD 2100 can receive requests for audio and/or video output delivery and formatting from any connected accessory and send control instructions to any or all of the connected accessories to route the audio and/or video output as desired.

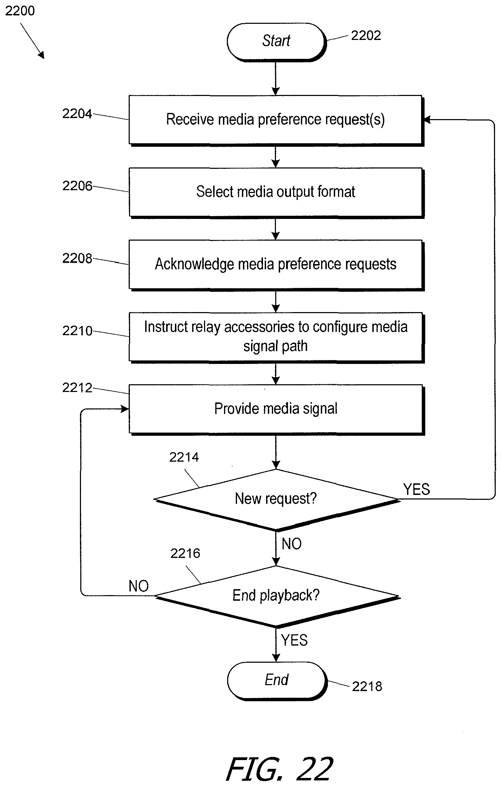

FIG. 22 is a flow diagram of a process 2200 that can be used by PCD 2100 to control routing of media (e.g., audio and/or video) signals according to an embodiment of the present invention. Process 2200 starts (block 2202) when multiple accessories are connected to PCD 2100 in a daisy chain as described above. At block 2204, PCD 2100 can receive media signal preference requests from one or more of the connected accessories. For example, any connected accessory can send an *AccessorySettings* command, e.g., using the technique illustrated in FIGs. 16 and 17. The accessory can specify its desired format for audio and/or video in the request.

At block 2206, PCD 2100 can select a format for the output media signals based on the requests. In some embodiments, block 2206 can include detecting and resolving conflicts among the received requests. Conflicting requests can occur, for example, if different accessories request different video formats or signal transports. For instance, one accessory can request NTSC on an S-Video transport while another requests HD 1080p on a component video transport. If PCD 2100 has only one video output path 2120, it may not be possible to simultaneously deliver both requested signals. On the other hand, if multiple accessories request the same signal format and transport, no conflict arises. Another example of conflict can occur if an accessory that requests audio or video is downstream of a relay accessory that does not support audio or video passthrough routing. In some embodiments, PCD 2100 can determine which accessories support audio or video passthrough routing based on identification information provided by each connected accessory using the *AccessorySettings* command.

Accordingly, control section 2108 of processor 2104 in PCD 2100 can be configured with conflict-resolution logic. For example, in one embodiment, PCD 2100 can grant the first request received by selecting the format of the first request at block 2206. PCD 2100 can also grant any subsequent requests that do not conflict with the first request (e.g., that use the same format). Any subsequent requests that conflict with the first request can be denied. Other logic rules can also be used. The presence of conflict resolution in PCD 2100 logic allows accessories to make requests without regard for whether another accessory might make a conflicting request.

At block 2208, PCD 2100 can acknowledge the received requests. In some embodiments, PCD 2100 sends an acknowledgement message to each accessory from which a request was received at block 2204. The acknowledgement message can include a status word, and the status word can indicate whether the request is being granted or denied. In some embodiments, the accessory can modify its behavior and/or alert the user if it is notified that a request has been denied.

At block 2210, PCD 2100 can instruct one or more connected relay accessories to configure their media signal paths such that output signals from path 2120 will be delivered to each accessory whose request was granted, e.g., using one or more *VPControl* commands. For instance, referring to FIG. 15, if relay 1505 requests video, PCD 2100 can instruct relays 1501 and 1503 to route video signals from their front interfaces to their rear interfaces.

At block 2212, PCD 2100 can provide media signals to the accessories. For example, control section 2108 can instruct media section 2110 to generate signals in the format selected at block 2206, and media section 2110 can deliver the signals to output paths 2120. Connected accessories can receive and route the signals in accordance with the instructions provided at block 2210.

At block 2214, PCD 2100 determines whether any new requests for media signals were received. If so, process 2200 can return to block 2204 to process the request and, if appropriate, change the selected format and/or the routing configuration of the accessories. In some embodiments, any request that would change the format is ignored or rejected if media section 2110 is generating signals when the request is received. If no new requests were received, process 2200 can continue to provide signals at block 2212.

At block 2216, PCD 2100 can determine if media playback should end. If so, process 2200 can end (block 2218). Process 2200 can continue indefinitely, until playback ends or one or more accessories detaches. In some embodiments, accessory detachment may automatically result in PCD 2100 pausing playback.

It will be appreciated that process 2200 is illustrative and that variations and modifications are possible. Steps described as sequential may be executed in parallel, order of steps may be varied, and steps may be modified, combined, added or omitted. For instance, different logic rules can be implemented to resolve conflicting requests. Any combination of media output formats can be supported. If PCD 2100 can supply multiple formats concurrently (e.g., using different signal wires) and relay accessories can route multiple formats concurrently, the likelihood of conflicting requests may be reduced.

Further, similar processes and device configurations can be used to provide input signals (e.g., audio and/or video) to PCD 2100 from one or more of the connected accessories. Accessories can send requests to provide input (e.g., from a microphone or camcorder in the accessory), and PCD 2100 can arbitrate the request and authorize one accessory to provide the input (or more than one accessory if PCD 2100 supports multiple concurrent inputs). In addition, the techniques described herein can be extended to signal types other than media signals; any streaming signal that can be communicated from a PCD to an accessory or vice versa can be managed in a multi-accessory daisy chain in a manner similar to that described herein.

While the invention has been described with respect to specific embodiments, one skilled in the art will recognize that numerous modifications are possible. For example, a "PCD" refers generally to any portable electronic device with any form of communication and/or media playback capability; a broad range of functionality may be incorporated. Similarly, the term "accessory" includes any electronic device capable of docking or otherwise connecting with a PCD, and the term "relay" or "relay accessory" includes any accessory that provides both a front port that can connect to a PCD or another relay and a rear port that can connect to an additional accessory, which might or might not be another relay. Further, while the terms "front port" and "rear port" (or "front interface" and "rear interface") are used herein to distinguish the two ports (or interfaces) of a relay accessory, the terms relate to connection topology and are not intended to imply any restriction on the location of a connector or other interface hardware relative to the body of the accessory.

Further, while some embodiments have been described as using multi-pin connectors to provide physical ports, use of connectors is not required. In some embodiments, a physical port can be established using a wireless connection, e.g., between a PCD and a relay accessory that can be connected by wires or pins to an additional relay accessory.

Certain embodiments described herein may not provide a direct path for interoperation of the connected accessories (e.g., a relay and another accessory). For example, as described above, in some embodiments, a relay can forward all commands received from a connected accessory without processing. In such embodiments, interoperation can be facilitated by the PCD. For example, the PCD can respond to a command received from a relay by sending a command to another connected accessory or vice versa. In other embodiments, a direct communication channel between the connected accessories can be provided if desired, allowing one accessory to directly operate upon another, e.g., by sending messages via the direct channel.

Embodiments of the present invention can be realized using any combination of dedicated components and/or programmable processors and/or other programmable devices. The various processes described herein can be implemented on the same processor or different processors in any combination. Accordingly, where components are described as being configured to perform certain operations, such configuration can be accomplished, e.g., by designing electronic circuits to perform the operation, by programming programmable electronic circuits (such as microprocessors) to perform the operation, or any combination thereof. Processes can communicate using a variety of techniques including but not limited to conventional techniques for interprocess communication, and different pairs of processes may use different techniques, or the same pair of processes may use different techniques at different times. Further, while the embodiments described above may make reference to specific hardware and software components, those skilled in the art will appreciate that different combinations of hardware and/or software components may also be used and that particular operations described as being implemented in hardware might also be implemented in software or vice versa.

Computer programs incorporating various features of the present invention may be encoded on various computer readable storage media; suitable media include magnetic disk or tape, optical storage media such as compact disk (CD) or DVD (digital versatile disk), flash memory, and the like. Computer readable media encoded with the program code may be packaged with a compatible electronic device, or the program code may be provided separately from electronic devices (e.g., via Internet download).

Thus, although the invention has been described with respect to specific embodiments, it will be appreciated that the invention is intended to cover all modifications and equivalents within the scope of the following claims.

## Claims

1. A relay device (504) comprising:
a first interface (536) configured to connect to a portable computing device; (502)
a second interface (538) configured to connect to an accessory (506); and
a controller (530) coupled to the first and second interfaces, the controller being configured to:
communicate with the portable computing device (502) via the first interface in accordance with an accessory protocol;
detect a connection of the accessory (506) to the second interface;
notify the portable computing device that the accessory has become connected to the second interface;
receive a first command from the portable computing device, the first command including a second command, the second command including data intended for the accessory;
determine whether the first command is a data sending command;
in response to determining that the command is not a data sending command, process the first command; and
in response to determining that the command is a data sending command:
extract the second command from the first command; and
relay the second command to the accessory (506);
wherein the first interface includes a first connector and the second interface includes a second connector complementary to the first connector.

2. The relay device (504) of claim 1 wherein the controller is further configured to receive an interface enabling command from the portable computing device (502) and to enable the second interface (538) to detect the connection of the accessory (506) in response to receiving the interface enabling command.

3. The relay device (504) of claim 1 further comprising:
a media output section; and (2136)
signal routing logic coupled to the first interface (2130), the second interface (2138), and the media output section (2136), the signal routing logic being configured to selectively route a media signal from the first interface to the second interface or to the media output section.

4. The relay device of claim 3 wherein the controller (2132) is further configured to provide a routing control signal to the signal routing logic in response to a routing message communicated from the portable computing device (2100) and wherein the signal routing logic is further configured to selectively route the media signal in response to the routing control signal.

5. A method of operating a relay accessory connected between an upstream device and a downstream device, the method comprising, by the relay accessory:
receiving a first command packet from the upstream device, the first command packet including a second command packet and a payload associated with the second command, wherein the first command packet is for the relay accessory and the second command packet is for the downstream device;
determining whether the command of the first command packet is a data sending command;
in response to determining that the command is not a data sending command, process the first command; and
in response to determining that the command is a data sending command:
extracting the second command packet from the first command packet; and
communicating the second command packet to the downstream device.

6. The method of claim 5 further comprising:
receiving a third command packet from the downstream device, wherein the third command packet is intended for the upstream device;
packaging the third command packet into a fourth command packet; and
sending the fourth command packet to the upstream device.

7. The method of claim 5 further comprising, prior to receiving the first command packet:
sending an identification message to the upstream device, the identification message indicating that the relay device has a rear interface to connect to the downstream device;
receiving an instruction from the upstream device to enable the rear interface to connect to the downstream device; and
enabling the rear interface in response to the instruction.

8. The method of claim 5 wherein the upstream device is either a portable computing device or another relay accessory and is transparent to the relay accessory.

9. A portable computing device (502) comprising:
a physical interface (520) configured to connect to a first relay accessory (504);
a plurality of virtual ports configured to connect to a plurality of accessories,
wherein one or more virtual ports of the plurality of virtual ports are associated with a physical port of the physical interface;
and
a processor (510) coupled to the physical interface, the processor (510) being configured to:
detect when the first relay accessory becomes connected to the physical interface;
receive notification that a second relay accessory is connected to the first relay accessory, wherein the second relay accessory is coupled to portable computing device via a first virtual port;
receive notification that a third relay accessory is connected to the second relay accessory, wherein the third relay accessory is coupled to the portable computing device via a second virtual port;
receive notification that an accessory is connected to the third relay accessory, wherein the accessory is coupled to the portable computing device via a third virtual port;
communicate with the first relay accessory using messages defined in an accessory protocol;
receive a first command packet from the first relay accessory, the first command packet including:
a second command packet generated by the second relay accessory,
wherein the second command packet is packaged in the first command packet;
a third command packet generated by the third relay accessory, wherein the third command packet is packaged in the second command packet; and
a fourth command packet generated by the accessory, wherein the fourth command packet is packaged in the third command packet;
extract the fourth command packet from the first command packet; and
perform an operation specified in the fourth command packet.

10. The portable computing device (502) of claim 9 wherein the processor is further configured to:
to instruct the first relay accessory to enable a rear interface of the first relay accessory to connect to the second relay accessory.

11. The portable computing device (502) of claim 9 further comprising a media output section configured to generate media output signals and wherein the processor (510) is further configured to:
receive at least one request for media format data from at least one requesting accessory, wherein the at least one requesting accessory includes at least one of the first relay accessory, the second relay accessory, the third relay accessory, and the accessory,
select a media format based on the at least one received request instruct the media output section to generate the media output signals in the selected media format; and
send an acknowledgement message to the requesting accessory, wherein the acknowledgement message includes an indication of whether the selected media signal format is a requested media signal format.

12. A method for operating a portable computing device, the method comprising, by the portable computing device:
communicating with a first accessory via an accessory interface using an accessory protocol;
determining whether the first accessory has a rear interface that is connected to a second accessory; in the event that the first accessory has a rear interface that is connected to a second accessory, determining whether the second accessory has a rear interface that is connected to a third accessory;
in the event that the second accessory has a rear interface that is connected to a third accessory, communicating with the third accessory via the accessory interface, wherein communicating with the third accessory includes:
generating a command to the third accessory, the command conforming to an accessory protocol;
packaging the command in a first data sending command of the accessory protocol;
packaging the first data sending command in a second data sending command of the accessory protocol; and
sending the second data sending command to the first accessory via the accessory interface.

13. The method of claim 12 further comprising, by the portable computing device:
receiving a data receiving command from the first accessory via the accessory interface;
extracting a payload from the data receiving command; and
processing the payload as a command from the second accessory.

14. A computer readable medium encoded with program instructions which when executed cause a method according to any of claims 5 to 8 and 12 to 13.

## Patentansprüche

1. Übermittlungsvorrichtung (504), umfassend:
eine erste Schnittstelle (536), die eingerichtet ist, um sich mit einer tragbaren Rechenvorrichtung zu verbinden; (502)
eine zweite Schnittstelle (538), die eingerichtet ist, um sich mit einem Zubehör (506) zu verbinden; und
eine Steuerung (530), die mit der ersten und der zweiten Schnittstelle gekoppelt ist, wobei die Steuerung eingerichtet ist zum:
Kommunizieren mit der tragbaren Rechenvorrichtungen (502) über die erste Schnittstelle in Übereinstimmung mit einem Zubehörprotokoll;
Erkennen einer Verbindung des Zubehörs (506) mit der zweiten Schnittstelle;
Benachrichtigen der tragbaren Rechenvorrichtungen darüber, dass das Zubehör mit der zweiten Schnittstelle verbunden worden ist;
Empfangen eines ersten Befehls von der tragbaren Rechenvorrichtung, wobei der erste Befehl einen zweiten Befehl beinhaltet, wobei der zweite Befehl Daten beinhaltet, die für das Zubehör beabsichtigt sind;
bestimmen, ob der erste Befehl ein Datensendebefehl ist;
in Antwort auf das Bestimmen, dass der Befehl kein Datensendebefehl ist, Verarbeiten des ersten Befehls; und
in Antwort auf das Bestimmen, dass der Befehl ein Datensendebefehl ist:
Extrahieren des zweiten Befehls aus dem ersten Befehl; und
Übermitteln des zweiten Befehls an das Zubehör (506);
wobei die erste Schnittstelle einen ersten Verbinder beinhaltet und die zweite Schnittstelle einen zweiten Verbinder beinhaltet, der zu dem ersten Verbinder komplementär ist.

2. Übermittlungsvorrichtung (504) nach Anspruch 1, wobei die Steuerung weiter eingerichtet ist, um einen Schnittstellenaktivierungsbefehl von der tragbaren Rechenvorrichtung (502) zu empfangen und, um die zweite Schnittstelle (538) zu aktivieren, um die Verbindung des Zubehörs (506) zu erkennen in Antwort auf das Empfangen des Schnittstellenaktivierungsbefehls.

3. Übermittlungsvorrichtung (504) nach Anspruch 1, weiter umfassend:
einen Medienausgabeabschnitt; und (2136)
Signalleitungslogik, die mit der ersten Schnittstelle (2130), der zweiten Schnittstelle (2138) und dem Medienausgabeabschnitt (2136) gekoppelt ist, wobei die Signalleitungslogik eingerichtet ist, um wahlweise ein Mediensignal von der ersten Schnittstelle an die zweite Schnittstelle oder den Medienausgabeabschnitt zu leiten.

4. Übermittlungsvorrichtung nach Anspruch 3, wobei die Steuerung (2132) weiter eingerichtet ist, um der Signalleitungslogik ein Leitungssteuerungssignal bereitzustellen in Antwort auf eine Leitnachricht, die von der tragbaren Rechenvorrichtung (2100) kommuniziert wird, und wobei die Signalleitungslogik weiter eingerichtet ist, um wahlweise das Mediensignal in Antwort auf das Leitsteuersignal zu leiten.

5. Verfahren zum Betreiben eines Übermittlungszubehörs, das zwischen einer vorgeschalteten Vorrichtung und einer nachgeschalteten Vorrichtung verbunden ist, wobei das Verfahren bei dem Übermittlungszubehör umfasst:
Empfangen eines ersten Befehlpakets von der vorgeschalteten Vorrichtung, wobei das erste Befehlpaket ein zweites Befehlpaket und eine Nutzlast beinhaltet, die die dem zweiten Befehl zugeordnet ist, wobei das erste Befehlpaket für das Übermittlungszubehör ist und das zweite Befehlpaket für die nachgeschaltete Vorrichtung ist;
Bestimmen, ob der Befehl des ersten Befehlpakets einen Datensendebefehl ist;
in Antwort auf das Bestimmen, dass der Befehl kein Datensendebefehl ist, Verarbeiten des ersten Befehls; und
in Antwort auf das Bestimmen, dass der Befehl ein Datensendebefehl ist: extrahieren des zweiten Befehlpakets aus dem ersten Befehlpaket; und
Kommunizieren des zweiten Befehlpakets an die nachgeschaltete Vorrichtung.

6. Verfahren nach Anspruch 5, weiter umfassend:
Empfangen eines dritten Befehlpakets von der nachgeschalteten Vorrichtung, wobei das dritte Befehlpaket für die vorgeschaltete Vorrichtung bestimmt ist;
Packen des dritten Befehlpakets in ein viertes Befehlspaket; und
senden des vierten Befehlpakets an die vorgeschaltete Vorrichtung.

7. Verfahren nach Anspruch 5, weiter umfassend, vor dem Empfangen des ersten Befehlpakets:
Senden einer Identifikationsnachricht an die vorgeschaltete Vorrichtung, wobei die Identifikationsnachricht angibt, dass die Übermittlungsvorrichtung eine rückseitige Schnittstelle aufweist, um sich mit der nachgeschalteten Vorrichtung zu verbinden;
Empfangen einer Anweisung von der vorgeschalteten Vorrichtung, um die rückseitige Schnittstelle zu aktivieren, um sich mit der nachgeschalteten Vorrichtung zu verbinden; und
Aktivieren der rückseitigen Schnittstelle in Antwort auf die Anweisung.

8. Verfahren nach Anspruch 5, wobei die vorgeschaltete Vorrichtung entweder eine tragbare Rechenvorrichtung oder ein anderes Übermittlungszubehör ist und für das Übermittlungszubehör transparent ist.

9. Tragbare Rechenvorrichtung (502), umfassend:
eine physische Schnittstelle (520), die eingerichtet ist, um sich mit einem ersten Übermittlungszubehör (504) zu verbinden;
eine Vielzahl virtueller Anschlüsse, die eingerichtet ist, um sich mit einer Vielzahl von Zubehören zu verbinden, wobei der eine oder die mehreren virtuellen Anschlüsse der Vielzahl von virtuellen Anschlüssen einem physischen Anschluss der physischen Schnittstelle zugeordnet sind;
und
einen Prozessor (510), der mit der physischen Schnittstelle gekoppelt ist, wobei der Prozessor (510) eingerichtet ist zum:
Erkennen, wenn das erste Übermittlungszubehör mit der physischen Schnittstelle verbunden wird;
Empfangen einer Benachrichtigung, dass das zweite Übermittlungszubehör mit dem ersten Übermittlungszubehör verbunden ist, wobei das zweite Übermittlungszubehör mit einer tragbaren Rechenvorrichtung über einen ersten virtuellen Anschluss gekoppelt ist;
Empfangen einer Benachrichtigung, dass ein drittes Übermittlungszubehör mit dem zweiten Übermittlungszubehör verbunden ist, wobei das dritte Übermittlungszubehör mit der tragbaren Rechenvorrichtung über einen zweiten virtuellen Anschluss gekoppelt ist;
Empfangen einer Benachrichtigung, das einen Zubehör mit dem dritten Übermittlungszubehör verbunden ist, wobei das Zubehör mit der tragbaren Rechenvorrichtung über einen dritten virtuellen Anschluss gekoppelt ist;
Kommunizieren mit dem ersten Übermittlungszubehör unter Verwendung von Nachrichten, die gemäß einem Zubehörprotokoll definiert sind;
Empfangen eines ersten Befehlpakets von dem ersten Übermittlungszubehör, wobei das erste Befehlspaket beinhaltet:
ein zweites Befehlspaket, das von dem zweiten Übermittlungszubehör erzeugt wird, wobei das zweite Befehlspaket in das erste Befehlspaket gepackt ist;
ein drittes Befehlspaket, das von dem dritten Übermittlungszubehör erzeugt wird, wobei das dritte Befehlspaket in das zweite Befehlspaket gepackt wird; und
ein viertes Befehlspaket, das durch das Zubehör erzeugt wird, wobei das vierte Befehlspaket in das dritte Befehlspaket gepackt ist;
Extrahieren des vierten Befehlspakets aus dem ersten Befehlspaket; und
Durchführen einer Handlung, die in dem vierten Befehlspaket spezifiziert ist.

10. Tragbare Rechenvorrichtungen (502) nach Anspruch 9, wobei der Prozessor weiter eingerichtet ist zum:
Anweisen des ersten Übermittlungszubehörs eine rückseitige Schnittstelle des ersten Übermittlungszubehörs zu aktivieren, um sich mit dem zweiten Übermittlungszubehör zu verbinden.

11. Tragbare Rechenvorrichtung (502) nach Anspruch 9, weiter umfassend einen Medienausgabeabschnitt, der eingerichtet ist, um Medienausgabesignale zu erzeugen, und wobei der Prozessor (510) weiter eingerichtet ist zum:
Empfangen von zumindest einer Anfrage nach Daten in einem Medienformat von zumindest einem anfragenden Zubehör, wobei das zumindest eine anfragende Zubehör zumindest eines von dem ersten Übermittlungszubehör, dem zweiten Übermittlungszubehör, dem dritten Übermittlungszubehör und dem Zubehör beinhaltet,
Auswählen eines Medienformats auf der Grundlage der zumindest einen empfangenen Anfrage, Anweisen des Medienausgabeabschnitts die Medienausgabesignale in dem ausgewählten Medienformat zu erzeugen; und
Senden einer Bestätigungsnachricht an die anfragende Vorrichtung, wobei die Bestätigungsnachricht einen Hinweis darauf beinhaltet, ob das ausgewählte Mediensignalformat ein angefragtes Mediensignalformat ist.

12. Verfahren zum Betreiben einer tragbaren Rechenvorrichtung, wobei das Verfahren bei der tragbaren Rechenvorrichtung umfasst:
Kommunizieren mit einem ersten Zubehör über eine Zubehörschnittstelle unter Verwendung eines Zubehörprotokolls;
Bestimmen, ob das erste Zubehör eine rückseitige Schnittstelle aufweist, die mit einem zweiten Zubehör verbunden ist; für den Fall, dass das erste Zubehör eine rückseitige Schnittstelle aufweist, die mit einem zweiten Zubehör verbunden ist, Bestimmen, ob das zweite Zubehör eine rückseitige Schnittstelle aufweist, die mit einem dritten Zubehör verbunden ist;
für den Fall, dass das zweite Zubehör eine rückseitige Schnittstelle aufweist, die mit einem dritten Zubehör verbunden ist, Kommunizieren mit dem dritten Zubehör über die Zubehörschnittstelle, wobei das Kommunizieren mit dem dritten Zubehör beinhaltet:
Erzeugen eines Befehls an das dritte Zubehör, wobei der Befehl einem Zubehörprotokoll entspricht;
Packen des Befehls in einen ersten Datensendebefehl des Zubehörprotokolls; und
Packen des ersten Datensendebefehls in einen zweiten Datensendebefehl des Zubehörprotokolls; und
Senden des zweiten Datensendebefehls an das erste Zubehör über die Zubehörschnittstelle.

13. Verfahren nach Anspruch 12, weiter umfassend bei der tragbaren Rechenvorrichtung:
Empfangen eines Datenempfangsbefehls von dem ersten Zubehör über die Zubehörschnittstelle;
Extrahieren einer Nutzlast aus dem Datenempfangsbefehl; und
Verarbeiten der Nutzlast als einen Befehl des zweiten Zubehörs.

14. Computerlesbares Medium, das mit Programmanweisungen codiert ist, welche, wenn sie ausgeführt werden, ein Verfahren gemäß einem der Ansprüche 5 bis 8 und 12 bis 13 veranlassen.

## Revendications

1. Un dispositif relai (504) comprenant :
une première interface (536) configurée pour se relier à un dispositif informatique portable (502) ;
une seconde interface (538) configurée pour se relier à un accessoire (506) ; et
un contrôleur (530) couplé à la première et à la seconde interface, le contrôleur étant configuré pour :
communiquer avec le dispositif informatique portable (502) via la première interface conformément à un protocole l'accessoire ;
détecter une connexion de l'accessoire (506) à la seconde interface ;
notifier au dispositif informatique portable que l'accessoire est maintenant relié à la seconde interface ;
recevoir une première commande en provenance du dispositif informatique portable, la première commande comprenant une seconde commande, la seconde commande comprenant des données destinées à l'accessoire ;
déterminer si la première commande est ou non une commande d'envoi de données ;
en réponse à la détermination que la commande n'est pas une commande d'envoi de données, traiter la première commande ; et
en réponse à la détermination que la commande est une commande d'envoi de données :
extraire la seconde commande de la première commande ; et
relayer la seconde commande vers l'accessoire (506) ;
dans lequel la première interface comprend un premier connecteur et la seconde interface comprend un second connecteur complémentaire du premier connecteur.

2. Le dispositif relai (504) de la revendication 1, dans lequel le contrôleur est en outre configuré pour recevoir une commande d'activation d'interface en provenance du dispositif informatique portable (502) et pour activer la seconde interface (538) pour détecter la connexion de l'accessoire (506) en réponse à la réception de la commande d'activation d'interface.

3. Le dispositif relai (504) de la revendication 1, comprenant en outre :
une section de délivrance de media (2136) ; et
une logique de routage de signal couplée à la première interface (2130), à la seconde interface (2138) et à la section de délivrance de media (2136), la logique de routage de signal étant configurée pour router sélectivement un signal de media depuis la première interface jusqu'à la seconde interface ou jusqu'à la section de délivrance de media.

4. Le dispositif relai de la revendication 3, dans lequel le contrôleur (2132) est en outre configuré pour délivrer un signal de contrôle de routage à la logique de routage de signal en réponse à un message de routage communiqué par le dispositif informatique portable (2100), et dans lequel la logique de routage de signal est en outre configurée pour router sélectivement le signal de media en réponse au signal de contrôle de routage.

5. Un procédé de mise en oeuvre d'un accessoire relai connecté entre un dispositif amont et un dispositif aval, le procédé comprenant, par l'accessoire relai :
recevoir un premier paquet de commande en provenance du dispositif amont, le premier paquet de commande comprenant un second paquet de commande et une charge utile associée à la seconde commande, le premier paquet de commande étant destiné à l'accessoire relai et le second paquet de commande étant destiné au dispositif aval,
déterminer si la commande du premier paquet de commande est ou non une commande d'envoi de données ;
en réponse à la détermination que la commande n'est pas une commande d'envoi de données, traiter la première commande ; et
en réponse à la détermination que la commande est une commande d'envoi de données :
extraire le second paquet de commande du premier paquet de commande ; et
communiquer le second paquet de commande au dispositif aval.

6. Le procédé de la revendication 5, comprenant en outre :
recevoir un troisième paquet de commande en provenance du dispositif aval, le troisième paquet de commande étant destiné au dispositif amont ;
empaqueter le troisième paquet de commande dans un quatrième paquet de commande ; et
envoyer le quatrième paquet de commande au dispositif amont.

7. Le procédé de la revendication 5, comprenant en outre, avant de recevoir le premier paquet de commande :
envoyer un message d'identification au dispositif amont, le message d'identification indiquant que le dispositif relai possède une interface arrière à connecter au dispositif aval ;
recevoir une instruction du dispositif amont pour activer l'interface arrière pour une connexion au dispositif aval ; et
activer l'interface arrière en réponse à l'instruction.

8. Le procédé de la revendication 5, dans lequel le dispositif amont est soit un dispositif informatique portable soit un autre accessoire relai et est transparent pour l'accessoire relai.

9. Un dispositif informatique portable (502) comprenant :
une interface physique (520) configurée pour se connecter à un premier accessoire relai (504) ;
une pluralité de ports virtuels configurés pour se connecter à une pluralité d'accessoires, un ou plusieurs ports virtuels de la pluralité de ports virtuels étant associés à un port physique de l'interface physique ; et
un processeur (510) couplé à l'interface physique, le processeur (510) étant configuré pour :
détecter le moment où le premier accessoire relai devient connecté à l'interface physique ;
recevoir une notification qu'un second accessoire relai est connecté au premier accessoire relai, le second accessoire relai étant couplé au dispositif informatique portable via un premier port virtuel ;
recevoir une notification qu'un troisième accessoire relai est connecté au second accessoire relai, le troisième accessoire relai étant couplé au dispositif informatique portable via un second port virtuel ;
recevoir une notification qu'un accessoire est connecté au troisième accessoire relai, l'accessoire étant couplé au dispositif informatique portable via un troisième port virtuel ;
communiquer avec le premier accessoire relai en utilisant des messages définis dans un protocole d'accessoire ;
recevoir un premier paquet de commande en provenance du premier accessoire relai, le premier paquet de commande comprenant :
un second paquet de commande généré par le second accessoire relai, le second paquet de commande étant empaqueté dans le premier paquet de commande ;
un troisième paquet de commande généré par le troisième accessoire relai, le troisième paquet de commande étant empaqueté dans le second paquet de commande ; et
un quatrième paquet de commande généré par l'accessoire, le quatrième paquet de commande étant empaqueté dans le troisième paquet de commande ;
extraire le quatrième paquet de commande du premier paquet de commande ; et
effectuer une opération spécifiée dans le quatrième paquet de commande.

10. Le dispositif informatique portable (502) de la revendication 9, dans lequel le processeur est en outre configuré pour :
donner instruction au premier accessoire relai d'activer une interface arrière du premier accessoire relai pour une connexion au second accessoire relai.

11. Le dispositif informatique portable (502) de la revendication 9, comprenant en outre une section de délivrance de media configurée pour générer des signaux de délivrance de media et dans lequel le processeur est en outre configuré pour :
recevoir au moins une requête pour des données de format de media en provenance d'au moins un accessoire requérant, au moins un accessoire requérant comprenant au moins l'un d'entre le premier accessoire relai, le second accessoire relai, le troisième accessoire relai, et l'accessoire,
sélectionner un format de media sur la base de la au moins une requête reçue, donner instruction à la section de délivrance de media de générer les signaux de délivrance de media dans le format de media sélectionné ; et
envoyer un message d'accusé de réception à l'accessoire requérant, le message d'accusé de réception incluant une indication de ce que le format de signal de media sélectionné est ou non un format de signal de media requis.

12. Un procédé de mise en oeuvre d'un dispositif informatique portable, le procédé comprenant, par le dispositif informatique portable :
communiquer avec un premier accessoire via une interface d'accessoire en utilisant un protocole d'accessoire ;
déterminer si le premier accessoire possède ou non une interface arrière qui est connectée à un second accessoire ;
dans le cas où le premier accessoire possède une interface arrière qui est connectée à un second accessoire, déterminer si le second accessoire possède ou non une interface arrière qui est connectée à un troisième accessoire ;
dans le cas où le second accessoire possède une interface arrière qui est connectée à un troisième accessoire, communiquer avec le troisième accessoire via l'interface d'accessoire, la communication avec le troisième accessoire comprenant :
générer une commande vers le troisième accessoire, la commande se conformant à un protocole d'accessoire ;
empaqueter la commande dans une première commande d'envoi de données du protocole d'accessoire ;
empaqueter la première commande d'envoi de données dans une seconde commande d'envoi de données du protocole d'accessoire ; et
envoyer la seconde commande d'envoi de données au premier accessoire via l'interface d'accessoire.

13. Le procédé de la revendication 12, comprenant en outre, par le dispositif informatique portable :
recevoir une commande de réception de données en provenance du premier accessoire via l'interface d'accessoire ;
extraire une charge utile de la commande de réception de données ; et
traiter la charge utile en tant que commande en provenance du second accessoire.

14. Un support lisible par informatique codé avec des instructions de programme qui, lorsqu'elles sont exécutées, assurent la mise en oeuvre d'un procédé selon l'une des revendications 5 à 8 et 12 à 13.
